(19) Europäisches Patentamt / European Patent Office / Office européen des brevets

(11) **EP 3 350 259 B1**

(12) **EUROPEAN PATENT SPECIFICATION**

(45) Date of publication and mention
of the grant of the patent:
**04.09.2019 Bulletin 2019/36**

(21) Application number: **16791677.4**

(22) Date of filing: **16.09.2016**

(51) Int Cl.:
*C08L 7/00* (2006.01)     *B60C 1/00* (2006.01)
*C08K 3/04* (2006.01)     *C08K 3/36* (2006.01)
*C08K 5/01* (2006.01)     *C08L 9/00* (2006.01)
*C08L 21/00* (2006.01)     *B29B 7/18* (2006.01)
*B29B 7/48* (2006.01)     *B29B 7/60* (2006.01)
*B29B 7/74* (2006.01)     *B29B 7/90* (2006.01)
*C08L 9/06* (2006.01)

(86) International application number:
**PCT/IB2016/055546**

(87) International publication number:
**WO 2017/046766 (23.03.2017 Gazette 2017/12)**

(54) **ELASTOMERIC COMPOSITIONS FOR TYRE COMPONENTS AND TYRES THEREOF**

ELASTOMERE ZUSAMMENSETZUNGEN FÜR REIFENBESTANDTEILE UND REIFEN DARAUS

COMPOSITIONS D'ÉLASTOMÈRES POUR DES ÉLÉMEMTS DE PNEU ET PNEUS METTANT EN OEUVRE CES DERNIÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2015 IT UB20153721**

(43) Date of publication of application:
**25.07.2018 Bulletin 2018/30**

(73) Proprietor: **Pirelli Tyre S.p.A.**
**20126 Milano (IT)**

(72) Inventors:
• **WAGEMANN, Juergen**
 **I-20126 Milano (IT)**
• **DE CANCELLIS, Pierluigi**
 **I-20126 Milano (IT)**
• **RATTI, Giuseppina**
 **I-20126 Milano (IT)**
• **SCURATI, Alberto**
 **I-20126 Milano (IT)**
• **QUINZANI, Paolo**
 **I-20126 Milano (IT)**
• **LOSTRITTO, Angela**
 **Breuberg (DE)**

(74) Representative: **Fraire, Cristina**
**PGA S.p.A.**
**Via Mascheroni, 31**
**20145 Milano (IT)**

(56) References cited:
**EP-A1- 1 035 164**     **EP-A1- 1 514 901**
**EP-A1- 2 468 815**     **EP-A2- 1 085 046**
**WO-A1-2008/145155**     **WO-A1-2009/062525**
**WO-A1-2014/191953**     **US-A1- 2013 172 474**
**US-B1- 6 204 320**     **US-B1- 6 525 133**

**Description**

FIELD OF THE INVENTION

The present invention relates to new elastomeric compositions for tyres which have excellent grip and braking performance on snow and, at the same time, on wet and dry roads.

These compositions allow making both improved winter tyres for use in all weather conditions and tyre suitable for all seasons, which do not need to be replaced in seasonal change from winter to summer and vice versa.

PRIOR ART

Patents are known relating to tyres comprising compositions which include, inter alia, liquid polymers. US2007135564 refers to the use of liquid polymers in tread materials to improve abrasion resistance and, in combination with highly structured carbon black and cross-linked plasticisers, to impart good dry braking performance and acceptable winter properties.

US4840988 describes the application of liquid polymers in tread materials to improve the grip on snow and ice and reduce the deterioration of performance.

US5851321 describes the use of liquid polymers to improve the ageing resistance of the materials - in particular to reduce the hardness changes during the storage period - and the grip performance on snow and ice.

US2013289197 describes the use of SBR rubbers diluted with liquid polymers rather than standard mineral oils, reporting advantages in terms of wear resistance, rolling resistance and wet braking, with less satisfactory results in the dry braking level.

EP1990217 describes treads for winter tyres in two layers, wherein the material of the outermost layer, comprising liquid polymers, is softer.

WO2008145155 describes tyres comprising a composition comprising liquid polymers of the SBR type, in combination with coupling agents containing at least one SH group; in this document, winter properties or applications are not discussed.

Some patents are known relating to tyres comprising compositions which include, inter alia, resins and oils. WO2013039499 describes a plasticising system for tread materials - comprising resins formed by terpene copolymers and vinyl aromatic compounds, in particular styrene and limonene copolymers and MES or TDAE oils - wherein said materials exhibit improved wet and dry braking properties and wear resistance.

WO2013032468 describes the use of plasticising mixtures in tread materials comprising resins (polylimonene) and oils (derived from petroleum or vegetable source) together with specific patterns and structures of the tread itself (density of the recesses), to improve the dry and snow drive on the corresponding tyres.

WO2007017060 describes plasticising mixtures - comprising resins (terpene/vinyl aromatic compounds, in particular limonene/styrene copolymers) and process oils such as MES and TDAE - for tread materials, mixtures which impart superior resistance to breakage, chipping and separation of parts from the tread.

WO2004022644 describes soft tread compositions which contain a combination of hydrocarbon resins (Resen2495) and of a vegetable plasticising oil (sunflower oil). According to what stated in this patent application, winter tyres exhibit better wear resistance properties with the same grip on snow and on wet roads.

Some patents are known relating to compositions for tyres which include resins in combination with liquid polymers in which the compositions are prepared according to conventional processes, by means of one or more mixing steps conducted with discontinuous mixers.

EP2468815 describes materials comprising resins in combination with liquid polymers, in particular with liquid SBR or liquid PDB polymers; such materials are used to make tyres with balanced wet grip, wear resistance and rolling properties. The document does not discuss winter properties or applications nor discloses a preparation process with a continuous reworking phase.

EP1085046 describes electrically conductive compositions for tyres comprising resins in combination with liquid polyisoprene rubbers. The document does not disclose a preparation process with a continuous reworking phase.

EP1035164 describes compositions for treads of tyres comprising resins in combination with liquid polymers, in particular with liquid PBD polymers. The document does not disclose a preparation process with a continuous reworking phase.

EP1514901 describes compositions for tyres comprising resins in combination with liquid polymers of the SBR type. The document does not disclose a preparation process with a continuous reworking phase. US6525133 describes compositions for treads of tyres comprising resins in combination with liquid polymers, in particular with liquid SBR polymers. The document does not disclose a preparation process with a continuous reworking phase.

US6204320 describes compositions for treads of tyres comprising resins in combination with liquid polymers, in particular with isoprene butadiene polymers. The document does not disclose a preparation process with a continuous reworking phase.

Some patents are known which describe the use of continuous mixers in the preparation of compositions for tyres.

For example WO2014191953, to the name of the Applicant, describes compositions for the treads of HP, UHP and racing tyres, comprising resins in high amounts to increase the adherence thereof to the asphalt. The incorporation of the resins is carried out in a continuous mixer, downstream of one or more conventional mixing (in batches) of the other ingredients. The materials thus obtained exhibit, at temperatures above 0 °C, an increase in hysteresis (tan delta) and a reduction of the modulus - attributable to the uniform dispersion of the resin - that are said to be predictive of better performance in terms of grip, drive and/or of road holding of the tyre.

WO2012085714, to the name of the Applicant, describes a particular continuous mixing process under high vacuum for the preparation of improved vulcanisable elastomeric materials. The process is exemplified in the preparation of a conventional composition for treads - not containing either liquid polymers or resins - the dynamic mechanical properties of which are evaluated at 23 °C and 70 °C. Such a composition is incorporated in the tread of winter tyres and tested in driving tests on dry ground. EP928679 mentions the possibility of degassing uncured elastomeric mixtures in the mixing chamber by applying a vacuum (pressure in the chamber of from 5 to 500 mbar), thereby reducing the vulcanisation time and facilitating the release of the tyre from the mould.

WO2009062525 to the name of the Applicant describes elastomeric compositions for tyres in which the dispersion of the components is improved by the application of a process comprising at least one continuous mixing step; such compositions do not include either liquid polymers or resins; this document does not discuss winter properties or applications of the resulting elastomeric materials. US20130172474 describes a self-sealing composition for tyres comprising resins in high amount in combination with liquid polymers, in particular with liquid PBD polymers. The composition comprises reinforcing fillers in minimal amounts, less than 30 phr, preferably as exemplified in the order of 1 phr. The viscosity of this composition is so low as to allow satisfactory incorporation of the ingredients also using open roll mixers or single screw extruders. The document does not disclose a preparation process with a continuous reworking phase.

## SUMMARY OF THE INVENTION

Within the scope of winter tyres, car manufacturers require increasingly higher performance both on dry and wet, with increased grip at low temperatures without unbalancing the overall properties. Ideally, one would like equally performing tyres on all types of road surfaces and in any weather and temperature condition. This result is very difficult to achieve.

Drive and braking at low temperatures are in fact conflicting performances with respect to the behaviour on dry or wet surfaces, especially at higher temperatures, and being able to make a tyre simultaneously characterised by all of these properties is a particularly challenging goal.

Possible foreseeable changes of the compositions such as, for example, increasing the content of the filler or varying the amount of conventional plasticisers such as mineral oils, or using plasticising mixtures with different glass transition temperature Tg, prove substantially ineffective per se. According to the Applicant, the documents mentioned above do not teach how to achieve an optimum balance of notoriously conflicting properties such as the behaviour on wet and dry with respect to drive and braking at low temperatures on snow, properties which are increasingly sought after by vehicle manufacturers as regards the performance of winter or all season tyres.

The Applicant has posed the problem of how to impart the opposing properties mentioned above to vehicle tyres, for winter or all seasons use, that is, controllability on dry and wet surfaces and at the same time high performance at low temperatures and on the snow.

The Applicant has surprisingly found a new composition for treads of tires which, due to the presence of a specific plasticising mixture and to the particular mixing process, unexpectedly improves, at the same time and significantly conflicting properties such as the behaviour and braking on dry and wet surfaces, grip and braking on snow, while maintaining also other important properties adequate, such as rolling resistance and wear.

Therefore, a first aspect of the present invention is an elastomeric composition for tyres of vehicles comprising at least

> one quantity X equal to at least 1 phr of at least one liquid polymer (A),
> one quantity Y equal to at least 1 phr of at least one resin (B),
> 100 phr of at least one solid diene elastomeric polymer (D),
> at least 30 phr of at least one reinforcing filler (E),

wherein said composition is obtainable according to a process (P) which comprises at least one mixing and dispersion step (P1) to give a first elastomeric composition followed by at least one reworking step (P2), wherein the mixing and dispersion step (P1) comprises

- feeding at least one mixing apparatus, comprising at least one discontinuous mixer and/or at least one continuous mixer, at least:

  one quantity X1 of the liquid polymer (A), wherein $0 \leq X1 \leq X$,
  one quantity Y1 of the resin (B), wherein $0 \leq Y1 \leq Y$,
  the solid diene elastomeric polymer (D),
  the reinforcing filler (E);

- mixing and dispersing said components, to give said first elastomeric composition;
- possibly unloading said first elastomeric composition from said mixing apparatus;
  and wherein the reworking step (P2) comprises
- feeding, to at least one continuous mixer, said first elastomeric composition and, possibly,

  one quantity X2 of the liquid polymer (A), wherein $0 \leq X2 \leq X$,
  one quantity Y2 of the resin (B), wherein $0 \leq Y2 \leq Y$,

  wherein X1 + X2 = X and Y1 + Y2 = Y,
- mixing said first elastomeric composition and dispersing therein the liquid polymer (A) and/or the resin (B) possibly fed in step (P2), by means of said at least one continuous mixer, preferably by applying, to said continuous mixer, a suction pressure (Pa) less than about 150 mbar in a manner so as to obtain said elastomeric composition; and
- unloading said elastomeric composition from said at least one continuous mixer.

A second aspect of the present invention consists of a process for the preparation of an elastomeric composition for tyres for vehicles comprising at least
one quantity X equal to at least 1 phr of at least one liquid polymer (A),
one quantity Y equal to at least 1 phr of at least one resin (B),
100 phr of at least one solid diene elastomeric polymer (D),
at least 30 phr of at least one reinforcing filler (E),
according to the first aspect of the invention,
which comprises at least a mixing and dispersion step (P1) to give a first elastomeric composition followed by at least one reworking step (P2),
wherein the mixing and dispersion step (P1) comprises

- feeding at least one mixing apparatus, comprising at least one discontinuous mixer and/or at least one continuous mixer, at least:

  one quantity X1 of the liquid polymer (A), wherein $0 \leq X1 \leq X$,
  one quantity Y1 of the resin (B), wherein $0 \leq Y1 \leq Y$,
  the solid diene elastomeric polymer (D),
  the reinforcing filler (E);

- mixing and dispersing said components, to give said first elastomeric composition;
- possibly unloading said first elastomeric composition from said mixing apparatus;
  and wherein the reworking step (P2) comprises
- feeding, to at least one continuous mixer, said first elastomeric composition and, possibly,
  one quantity X2 of the liquid polymer (A), wherein $0 \leq X2 \leq X$,
  one quantity Y2 of the resin (B), wherein $0 \leq Y2 \leq Y$,
  wherein X1 + X2 = X and Y1 + Y2 = Y,
- mixing said first elastomeric composition and dispersing therein the liquid polymer (A) and/or the resin (B) possibly fed in step (P2), by means of said at least one continuous mixer, preferably by applying, to said continuous mixer, a suction pressure (Pa) less than about 150 mbar in a manner so as to obtain said elastomeric composition; and
- unloading said elastomeric composition from said at least one continuous mixer.

A third aspect of the present invention consists of a final elastomeric composition comprising an elastomeric composition for tyres according to the first aspect of the invention and further:

- at least 0.05 phr of at least one vulcanising agent (F); and preferably
- from 0.5 to 10 phr of at least one activating agent for the vulcanisation; and/or

- from 0.05 to 10 phr of at least one accelerant for the vulcanisation, and/or
- from 0.05 to 2 phr of at least one retardant for the vulcanisation, and/or
- from 0.1 to 20 phr of at least one coupling agent (G).

A fourth aspect of the present invention consists of a component for tyres for vehicles comprising a final elastomeric composition obtained by using the elastomeric composition according to the invention.

Preferably, such a component is a tread band.

A fifth aspect of the present invention consists of a tyre for vehicles comprising a tyre component, preferably a tread band, comprising a vulcanised elastomeric composition obtained by vulcanisation of the final elastomeric composition obtained by using the elastomeric composition according to the invention.

DETAILED DESCRIPTION OF THE INVENTION

For the purposes of the present description and of the following claims, the term "phr" (parts per hundreds of rubber) means the parts by weight of a given component of the elastomeric composition by 100 parts by weight of the solid diene elastomeric polymer (D).

Unless otherwise indicated, all the percentages are expressed as percentages by weight.

The elastomeric composition for tyres according to the present invention is characterised by one or more of the following preferred aspects taken alone or in combination with one another.

The composition comprises one quantity X of at least one liquid polymer (A), wherein said quantity X is at least 1 phr, preferably at least 3 phr or 5 phr or 10 phr or 15 phr or 20 phr.

The composition preferably comprises one quantity X of at least one liquid polymer (A) less than 70 phr, more preferably less than 60 phr, even more preferably less than 50 phr.

The composition preferably comprises one quantity X of at least one liquid polymer (A) comprised between 3 and 70 phr or between 5 and 60 phr or between 5 and 50 phr or between 5 and 40 phr or between 5 and 30 phr.

Preferably, the composition comprises only one liquid polymer (A), the quantity X of which is according to the preferred quantities above.

Preferably, the composition comprises two or more liquid polymers (A), the added quantities X of which are according to the preferred quantities above.

In the preparation of the present composition, the liquid polymer (A) can be added in full during step P1 or in full during step P2, or it can be added in part during the first step P1 (in a quantity X1) and in part during the second step P2 (in a quantity X2), for a total quantity equal to X.

Preferably, the liquid polymer (A) can be added in full during step P1.

The term "liquid polymer" means a diene polymer derived from the polymerisation of one or more monomers, among which at least one is a conjugated diene, said polymer at the temperature of 23 °C being a pourable liquid or a low viscosity fluid.

Preferably, the liquid polymer (A) is characterised by one or more of the following parameters:

- a weight average molecular weight ($\overline{M}w$) not higher than 80000 g/mol, and/or
- a glass transition temperature (Tg) lower than 0 °C.

The weight average molecular weight ($\overline{M}w$) may be measured according to known techniques in the field such as for example by GPC (Gel Permeation Chromatography) according to the ISO 13885 method.

The glass transition temperature Tg can be conveniently measured by using a differential scanning calorimeter (DSC) according to methods well known to those skilled in the art (ISO 22768 "Rubber, Raw - Determination of the glass transition temperatures by differential scanning calorimetry (DSC)". Preferably, the liquid polymer (A) is characterised by a ($\overline{M}w$) of between 500 and 80000 g/mol, more preferably between 500 and 60000 g/mol.

Preferably, the liquid polymer (A) is characterised by a glass transition temperature (Tg) of between - 105 and 0 °C, more preferably between -100 °C and -50 °C.

Preferably, the one or more liquid polymers (A) are selected from among liquid polymers and copolymers based on alkylene, preferably based on butadiene (BR), isoprene (IR), isoprene/butadiene rubber (IBR), styrene/butadiene rubber (SBR), optionally hydroxy and epoxy functionalised, or from among depolymerized liquid natural polymers (NR).

Preferably, the one or more liquid polymers (A) are selected from among liquid polymers based on butadiene (BR).

Preferably, said one or more liquid polymers (A) based on butadiene (BR) have a weight average molecular weight of between 500 and 30000 g/mol, preferably between 1000 and 20000 g/mol.

Preferably, said one or more liquid polymers (A) based on butadiene (BR) have a glass transition temperature (Tg) of between -100 °C and 0 °C, preferably between -95 °C and -50 °C.

Preferably, said one or more liquid polymers (A) based on butadiene (BR) have a vinyl content of between 0 and 90%, preferably between 1 and 50%.

Possibly, said one or more liquid polymers (A) based on butadiene (BR) can be modified with maleic anhydride, esterified or acid carboxylic groups, epoxy groups, hydroxyl groups or trialkoxy-silyl groups. Preferably, the one or more liquid polymers (A) are selected from among liquid polymers based on isoprene (IR).

Preferably, said one or more liquid polymers (A) based on isoprene (IR) have a weight average molecular weight of between 3000 and 80000 g/mol, preferably between 10000 and 60000 g/mol.

Preferably, said one or more liquid polymers (A) based on isoprene (IR) have a glass transition temperature (Tg) of between -70 °C and -30 °C.

Possibly, said polyisoprenes can be modified with maleic anhydride, esterified or acid carboxylic groups, epoxy groups or hydroxyl groups.

Preferably, the one or more liquid polymers (A) are selected from among liquid polymers based on styrene/butadiene (SBR).

Preferably, said one or more liquid polymers (A) based on stirene/butadiene (SBR) have a weight average molecular weight of between 1000 and 60000 g/mol, more preferably between 3000 and 50000 g/mol.

Preferably, said one or more liquid polymers (A) based on styrene/butadiene (SBR) have a styrene content of between 5 and 50% by weight, preferably between 5 and 30% by weight.

Preferably, said one or more liquid polymers (A) based on styrene/butadiene (SBR) have a Tg lower than 0 °C, more preferably between -70 °C and 0 °C.

Preferably, the one or more liquid polymers (A) are selected from among depolymerized liquid natural polymers (NR).

Preferably, said one or more depolymerized liquid natural (NR) polymers (A) have a weight average molecular weight lower than 60000 g/mol, more preferably lower than 40000 g/mol.

Examples of suitable liquid polymers (A) are:

- liquid polymers based on styrene - butadiene (SBR) marketed by Cray Valley under the trade name RICON 100, 181 RICON, RICON 184;
- liquid polymers based on butadiene (BR) marketed by Evonik under the trade name POLYVEST 110, 130 POLYVEST, POLYVEST MA 75; marketed by Kuraray under the trade name LBR 307, LBR 305, LBR 300; and marketed by Cray Valley under the trade name RICON 130, RICON 130 MA8, RICON 130 MA 13, RICON 150, RICON 156, RICON 157;
- liquid polymers based on isoprene (IR) marketed by Kuraray under the trade name LIR 30, LIR 50, LIR 403, LIR 410, among natural polyisoprenes: DPR 35, DPR 40, DPR75, DPR 400 of DPR INDUSTRIES

The elastomeric composition for tread according to the invention comprises one quantity Y equal to at least 1 phr of a resin (B).

Preferably, the composition comprises one quantity Y of at least 3 phr or 5 phr or 7 phr of at least one resin (B).

Preferably, the composition comprises one quantity Y of less than 40 phr or 30 phr or 25 phr of at least one resin (B).

Preferably, the composition comprises one quantity Y of from 1 to 40 phr or from 3 to 30 phr or from 3 to 25 phr, or from 5 to 30 phr or from 5 to 25 phr or from 5 to 20 phr or from 5 to 15 phr of at least one resin (B).

Preferably, the composition comprises one quantity Y of only one resin (B), the quantity of which is according to the above preferred quantities.

Preferably, the composition comprises one quantity Y of two or more resins (B), the quantities of which are according to the above preferred quantities.

Preferably, the elastomeric composition for tyres according to the present invention comprises a total quantity (Y) of resin B of less than 30 phr.

In the preparation of the present composition, the resin (B) can be added in full during step P1 or in full during step P2, or it can be added in part during the first step P1 (in a quantity Y1) and in part during the second step P2 (in a quantity Y2), for a total quantity equal to Y.

Preferably the resin (B) is added in full in step (P1), if present in low quantities, for example of the order of 10 phr or less, while it is preferably divided between step P1 and step P2 for larger quantities, for example of the order of 15 or 20 phr and above.

The term "resin" is used to mean a polymer having thermoplastic or at least partially thermoplastic characteristics (as in the case of elastomeric/thermoplastic block copolymers).

Thermoplastic characteristics is used to indicate the tendency of the polymer to increase its viscosity, that is, to deform plastically when subjected to a temperature increase and/or to a sufficiently strong deformation. These characteristics of thermoplasticity differentiate the behaviour of a resin from that of an elastomer, as defined hereinafter.

Moreover, a resin is not derived from the polymerisation of conjugated dienes, unlike the liquid polymer (A) and the diene elastomer (D) as defined herein.

The resin (B) of the present composition is a non-cross-linkable polymer (non-reactive resin). Preferably, the resin (B) is characterised by one or more of the following parameters:

- a weight average molecular weight ($\overline{M}w$) of between 200 and 3000 g/mol, and/or
- a glass transition temperature (Tg) higher than 0 °C.

The weight average molecular weight ($\overline{M}w$) may be measured according to known techniques in the field such as, for example, by SEC (Size-Exclusion Chromatography) according to the ASTM D6579-11 method "Standard Practice for Molecular Weight Averages and Molecular Weight Distribution of Hydrocarbon, Rosin and Terpene Resins by Size-Exclusion Chromatography".

The glass transition temperature (Tg) and the softening temperature (Tm) can conveniently be measured using a differential scanning calorimeter (DSC) according to methods well known to the man skilled in the art, such as the ASTM D 6604 method (Glass Transition Temperatures of Hydrocarbon resins by Differential Scanning Calorimetry).

Preferably, the resin (B) is characterised by a weight average molecular weight ($\overline{M}w$) of between 500 and 3000 g/mol, preferably between 500 and 2000 g/mol.

Preferably, the resin (B) is characterised by a glass transition temperature (Tg) higher than 25 °C.

Preferably, the solid resin (B) has a softening temperature (Tm) higher than 25 °C, more preferably a softening temperature comprised of between 50 and 160 °C or between 80 °C and 140 °C.

Preferably, the liquid resin (B) has a softening temperature lower than 25 °C, preferably lower than 0 °C or -10 °C or -25 °C.

The resin (B) used in the composition is preferably selected from the group comprising hydrocarbon resins, phenolic resins, natural resins and mixtures thereof.

Preferably, the resin (B) is a hydrocarbon resin.

Preferably, the resin (B) is a mixture of a natural resin and a hydrocarbon resin.

The hydrocarbon resin (B) may be aliphatic, aromatic or combinations thereof, meaning that the base polymer of the resin can consist of aliphatic and/or aromatic monomers.

The hydrocarbon resin (B) may be natural (e.g. vegetable) or synthetic or derived from petroleum. In some cases, non-limiting for the invention, these resins essentially contain only hydrogen and carbon atoms.

Preferably, the hydrocarbon resin (B) has a weight average molecular weight of between 500 and 3000 g/mol, preferably between 700 and 1500 g/mol.

Preferably, the hydrocarbon resin (B) is selected from homo- or copolymers of cyclopentadiene (CPD), dicyclopentadiene (DCPD), homo- or copolymers of terpene, homo- or copolymers of the C5 fraction and mixtures thereof, preferably DCPD/vinyl aromatic copolymers, DCPD/terpene copolymers, DCPD/C5 fraction copolymers, terpene/vinyl aromatic copolymers, C5 fractions/vinyl aromatic copolymers and combinations thereof.

Examples of vinyl aromatic monomers include styrene, alpha-methylstyrene, ortho-, meta-, para-methylstyrene, vinyl-toluene, para-tert-butylstyrene, methoxy-styrenes, chloro-styrenes, vinyl mesitylene, divinyl-benzenes, vinyl-naphthalenes, vinyl aromatic monomers derived from C8-C10 fraction, in particular from C9.

Preferably, the hydrocarbon resin (B) is selected from resins derived from coumarone-indene, styrene-indene, styrene-alkylstyrene, and aliphatic resins.

Specific examples of commercially available hydrocarbon resins (B) are NOVARES C resins, manufactured by RUTGERS CHEMICAL GmbH (indene-coumarone synthetic resins) NOVARES C10, C30 and C90 being particularly preferred.

Examples of commercially available styrene-indene hydrocarbon resins (B) are UNILENE At 100, manufactured by Braskem, and Novares TL 90, manufactured by Ruetgers.

Examples of commercially available alkyl-styrene hydrocarbon resins (B) are: Sylvares SA 85, manufactured by Arzona Chemical, Kristalex F 85, manufactured by Eastman.

Examples of commercially available aliphatic hydrocarbon resins (B) are: Escorez® 1102 (manufactured by ExxonMobil), Piccotac 1100 (manufactured by Eastman), Quintone A 100 (manufactured by Zeon Chemicals).

Preferably, the resin (B) is a phenolic resin.

Preferably, the phenolic resin (B) is selected from among the resins with alkylphenol-formaldehyde base, alkylphenolic resins modified with rosin, resins alkylphenol-acetylene based, modified alkylphenolic resins and resins terpene-phenol based.

Specific examples of commercially available phenolic resins (B) that can be used in the present invention are: RESINA SP-1068 (manufactured by SI GROUP Inc.) (octylphenol-formaldehyde resin); DUREZ 32333 (manufactured by Sumitomo Bakelite) (phenol-formaldehyde resin); KORESIN (manufactured by BASF Company) (pt-butylphenol-acetylene resin); SYLVARES TP 115 (manufactured by Arizona Chemicals) (terpen-phenolic resin).

Preferably, the resin (B) is a natural resin based on terpene.

Preferably, the resin (B) is a polyterpene resin selected from the homo- or copolymers of alpha-pinene, beta-pinene, limonene, and vinyl aromatic monomers (styrene) and/or aromatic monomers (phenol).

Preferably, the resin (B) is a polyterpene resin having a glass transition temperature (Tg) higher than 25 °C.

Preferably, the resin (B) is a polyterpene resin having a softening temperature (Tm) of between 50 °C and 150 °C.

Preferably, the resin (B) is a polyterpene resin having a weight average molecular weight of between 500 and 3000 g/mol.

Examples of commercially available natural terpene-based resins that can be used in the present invention are: Piccolyte F90 and Piccolyte F105, manufactured by PINOVA; Dercolyte A 115 and Dercolyte M 115, manufactured by DRT.

An example of a terpene resin is marketed under the trade name of Dercolyte TS105 (DRT) (terpene and styrene copolymer).

Preferably, the resin (B) is a natural resin based on rosin.

The term rosin commonly indicates mixtures of isomer organic acids (rosin acids), characterised by a common structure, comprising three C6 fused rings, double bonds in different number and positions and a single carboxylic group.

Examples of rosin-based resins are marketed by DRT under the trade name HYDROGRAL G and DERTOLINE P 105.

The elastomeric composition for tyres according to the present invention may further comprises at least one plasticising oil (C).

Preferably, the composition comprises one quantity Z of at least 1 phr or 5 phr or 10 phr of at least one plasticising oil (C).

Preferably, the composition comprises one quantity Z of less than 70 phr or 60 phr or 50 phr of at least one plasticising oil (C).

Preferably, the composition comprises one quantity Z of from 0 to 70 phr or from 0 to 60 or from 0 phr to 50 phr or from 5 to 70 phr or from 10 to 60 phr or from 15 to 50 phr of at least one plasticising oil (C).

In the preparation of the present composition, the plasticising oil (C), if present, can be added in full during step P1 or in full during step P2, or it can be added in part during the first step P1 (in a quantity Z1) and in part during the second step P2 (in a quantity Z2), for a total quantity equal to Z.

Moreover, the plasticising oil (C) can also be derived from the commercial compositions of diene elastomeric polymers (D) in which it is present as a thinner (extender).

In this case, indicating with Z3 the amount of oil (C) present as an extender of the solid elastomeric polymer (D), the total quantity Z of oil (C) in the composition of the invention will be equal to the sum of quantities Z1 + Z2 + Z3, wherein

$$0 \leq Z1 \leq Z,$$

$$0 \leq Z2 \leq Z,$$

$$0 \leq Z3 \leq Z.$$

Preferably, the composition comprises only one plasticising oil (C), the total quantity Z of which is according to the preferred quantities above.

Preferably, the composition comprises two or more plasticising oils (C), the total added quantities Z of which are according to the preferred quantities above.

Preferably, the plasticising oil (c) is added in full in step P1 (Z1+Z3 = Z, Z2=0).

The term "plasticising oil" means a process oil derived from petroleum or a mineral oil or a vegetable oil or a synthetic oil or combinations thereof.

The plasticising oil (C) is not derived from the polymerisation of conjugated dienes, unlike the liquid polymer (A) and the diene elastomer (D) as defined herein.

Preferably, the plasticising oil (C) exhibits one or more of the following features:

- a weight average molecular weight ($\overline{M}w$) not higher than 600 g/mol or, if the class of the RAE, a weight average molecular weight of between 400 and 10000 g/mol, and/or
- a glass transition temperature (Tg) lower than -30°C.

Preferably, the plasticising oil (C) is a process oil derived from petroleum selected from paraffins (saturated hydrocarbons), naphthenes, aromatic polycyclic and mixtures thereof.

Examples of suitable process oils derived from petroleum are aromatic, paraffinic, naphthenic oils such as MES (Mild Extract Solvated), DAE (Distillate Aromatic Extract), TDAE (Treated Distillate Aromatic Extract), TRAE (Treated Residual Aromatic Extract), RAE (Residual Aromatic Extract) known in the industry.

The term RAE means a complex mixture of mainly polycyclic aromatic hydrocarbons obtained by extracting the residue of distillation of crude oil with solvents (CAS No. 64742-10-5).

Preferably, the plasticising oil (C) is a process oil derived from petroleum with a low aromatic content, selected for example from TDAE, TRAE, MES, paraffinic or naphthenic oils.

Examples of suitable plasticising oils (C) are oils derived from petroleum: NYTEX 4700 marketed by Nynas, EXTENSOIL 1471 marketed by Repsol, VIVATEC 500 marketed by H&R; and vegetable oils: RADIA 6132 marketed by Oleon, Agripure AP 18 and Agripure AP 75 marketed by Cargill.

Preferably, the plasticising oil (C) is an oil of natural or synthetic origin derived from the esterification of glycerol with fatty acids, comprising glycerin triglycerides, diglycerides, monoglycerides or mixtures thereof.

Preferably, these oils have a glass transition temperature (Tg) lower than -70 °C.

Examples of suitable vegetable oils are sunflower, soybean, linseed, rapeseed, castor and cotton oil. Preferably, the plasticising oil (C) is a synthetic oil selected from among the alkyl or aryl esters of phthalic acid or phosphoric acid. Preferably, these esters have a glass transition temperature (Tg) lower than -70 °C.

These oils may be used alone or as a mixture.

Preferably, the elastomeric compositions according to the invention comprise at least 10 phr or 20 phr or 30 phr of plasticising mixture, by plasticising mixture meaning the combination of liquid polymer (A), resin (B) and, if present, plasticising oil (C) components.

The quantity of plasticising mixture corresponds to the sum of quantities X, Y and, if present, Z as defined above.

Preferably, the compositions comprise no more than 110 phr, 100 phr, 90 phr, 80 phr of plasticising mixture.

Preferably, the compositions comprise 10 to 110 phr, 20 to 100 phr, 30 to 90 phr, 40 to 80 phr of plasticising mixture.

The three components A, B and, optionally, C of the plasticising mixture are not necessarily pre-mixed together to give a separate plasticising mixture but in the preparation they may be added to the composition individually, in any sequence or step of the preparation process, as detailed hereinafter, or may be associated in whole or in part with one or more of the other components, such as in the case of the plasticising oils (C) which are, at least in part, already incorporated into the commercial elastomeric materials as extenders.

The elastomeric composition for tyres according to the present invention comprises 100 phr of at least one solid diene elastomeric polymer (D).

By "solid elastomeric polymer or solid elastomer" it is meant a natural or synthetic polymer which at room temperature can be stretched repeatedly to at least twice its original length and which, after removal of the tensile load immediately returns with force to approximately its original length (definition according to ASTM, committee E8, Philadelphia 1976).

By "diene polymer" it is meant a polymer or copolymer derived from the polymerisation of one or more different monomers, among which at least one of them is a conjugated diene (conjugated diolefin).

Preferably, the solid diene elastomeric polymer (D) has a weight average molecular weight ($\overline{M}w$) higher than 80000 g/mol.

Preferably, the solid diene elastomeric polymer (D) which can be used in the present invention can be selected from those commonly used in sulphur-crosslinkable elastomeric materials, which are particularly suitable for producing tyres, that is to say, from elastomeric polymers or copolymers with an unsaturated chain characterised by a glass transition temperature (Tg) generally lower than 20 °C, preferably in the range of from 0 °C to -110 °C.

These polymers or copolymers may be of natural origin or may be obtained by solution polymerization, emulsion polymerization or gas-phase polymerization of one or more conjugated diolefins, optionally mixed with at least one comonomer selected from monovinylarenes and/or polar comonomers in an amount not exceeding 60% by weight.

The conjugated diolefins generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof.

1,3-butadiene and isoprene are particularly preferred.

Monovinylarenes, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, $\alpha$-methylstyrene, 3-methylstyrene, 4-propylstyrene, 4-cyclohexylstyrene, 4-dodecylstyrene, 2-ethyl-4-benzylstyrene, 4-p-tolyl-styrene, 4-(4-phenylbutyl)styrene, or mixtures thereof. Styrene is particularly preferred.

Polar comonomers that may optionally be used, can be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile or mixtures thereof.

Preferably, the solid diene elastomeric polymer (a) which can be used in the present invention can be selected, for example, from: cis-1,4-polyisoprene (natural or synthetic, preferably natural rubber NR), 3,4-polyisoprene, polybutadiene (BR), in particular polybutadiene with a high content of 1,4-cis, optionally halogenated isoprene/isobutene copolymers, 1,3-butadiene/acrylonitrile copolymers, styrene/1,3-butadiene copolymers (SBR), styrene/isoprene/1,3-butadiene copolymers, styrene/1,3-butadiene/acrylonitrile copolymers, or mixtures thereof.

According to a preferred embodiment, said elastomeric composition comprises at least 10% by weight, preferably between 20% by weight and 100% by weight, with respect to the total weight of said at least one solid diene elastomeric polymer (D), of natural rubber.

Preferably, the solid elastomeric diene polymer (D) comprises

- from 20 to 100 phr, preferably from 40 to 100 phr of SBR, and/or
- from 0 to 60 phr, preferably from 0 to 50 phr of BR, and/or
- from 0 to 70 phr, preferably from 0 to 60 phr of NR.

The elastomeric composition according to the invention can optionally comprise at least one elastomeric polymer of one or more monoolefins with an olefinic comonomer or derivatives thereof (a'). The monoolefins can be selected from: ethylene and $\alpha$-olefins generally containing from 3 to 12 carbon atoms, such as for example propylene, 1-butene, 1-pentene, 1-hexene, 1-octene or mixtures thereof. The following are preferred: copolymers selected from ethylene and an $\alpha$-olefin, optionally with a diene; isobutene homopolymers or copolymers thereof with small amounts of a diene, which are optionally at least partially halogenated. The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene or mixtures thereof. Among them, the following are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; or mixtures thereof.

The solid diene elastomeric polymer (D) may optionally be functionalised by reaction with suitable terminating agents or coupling agents (solid diene elastomeric polymer a'). In particular, the diene elastomeric polymers obtained by anionic polymerization in the presence of an organometallic initiator (in particular, an organolithium initiator) may be functionalised by reacting the residual organometallic groups derived from the initiator with suitable terminating agents or coupling agents such as, for example, imines, carbodiimides, alkyltin halides, substituted benzophenones, alkoxysilanes or aryloxysilanes.

The elastomeric composition for tyres according to the present invention comprises at least 30 phr of at least one reinforcing filler (E).

The elastomeric composition for tyres according to the present invention comprises at least 30 phr in total of one or more reinforcing fillers (E).

Preferably, the composition comprises at least 40 phr or 50 phr of at least one reinforcing filler (E).

Preferably, the composition comprises no more than 150 phr or 140 or phr or 130 phr or 120 phr or 110 phr or 100 phr of at least one reinforcing filler (E).

Preferably, the composition comprises no more than 150 phr or 140 or phr or 130 phr or 120 phr or 110 phr or 100 phr in total of one or more reinforcing fillers (E).

Preferably, the composition comprises from 30 to 150 phr or 30 to 120 phr or from 50 to 120 phr or from 70 to 110 phr or from 80 to 100 phr of at least one reinforcing filler (E).

In the preparation of the present composition, the reinforcing filler (E) is generally added during the mixing and dispersion step P1.

Preferably, the reinforcing filler (E) is selected from carbon black, a white filler or mixtures thereof. Preferably, said reinforcing filler (E) is a white filler selected from among hydroxides, oxides and hydrated oxides, salts and hydrated salts of metals, silicates fibres or mixtures thereof.

Preferably, said filler is silica-based.

Silica can interact during mixing with the silane coupling agent, added for the purpose of making the silica compatible and dispersible in the elastomeric polymer.

This reaction is typically produces ethanol that is effectively extracted and removed by optional suction under high vacuum.

Preferably, said reinforcing filler (E) is carbon black.

Preferably, said carbon black reinforcing filler is present in the elastomeric composition in an amount ranging between 1 phr and 120 phr, preferably between about 30 or 40 phr and about 110 phr. Preferably, the carbon black reinforcing filler is selected from those having a surface area not smaller than 20 $m^2$/g, preferably larger than 50 $m^2$/g (as determined by STSA - statistical thickness surface area according to ISO 18852:2005).

The carbon black is for example N234 marketed by Birla Group (India) or by Cabot Corporation. Preferably, said reinforcing filler (E) comprises mixtures of fillers, preferably mixtures of carbon black and silica.

Preferably, at least 60%, 70% or 75% of such mixtures is silica.

The final elastomeric composition for tyres according to the present invention comprises at least 0.05 phr of at least one vulcanising agent (E).

By the term "final elastomeric composition" it is meant a vulcanisable elastomeric composition obtainable starting from the elastomeric composition according to the first aspect of the invention by the addition of vulcanising agents and, optionally, one or more vulcanisation adjuvants.

Preferably, the composition comprises at least 0.1 phr, 1 phr, 2 phr, 3 phr, 4 phr of at least one vulcanising agent (F).

Preferably, the composition comprises no more than 15 phr, 10 phr, 8 phr of at least one vulcanising agent (F).

Preferably, the composition comprises from 0.05 to 15 phr or from 0.1 to 10 phr or from 0.2 to 10 phr or from 1 to 10 phr or from 2 to 10 phr of at least one vulcanising agent (F)

In the preparation of the present composition, the vulcanising agent (F) is preferably added during the mixing and dispersion step P1, so as to provide as first elastomeric composition a final and thus vulcanisable elastomeric composition. If the step P1 comprises multiple sub-steps, preferably the vulcanising agent (F) and any activators, accelerants and vulcanisation retardants are added in the last one of said sub-steps.

Preferably, the vulcanising agent (F) is selected from among sulphur, and sulphur-containing molecules that act as sulphur donors.

Sulphur or derivatives thereof may advantageously be selected, for example, from:

(i) soluble sulphur (crystalline sulphur);

(ii) insoluble sulphur (polymeric sulphur);

(iii) sulphur dispersed in oil (for example 33% sulphur known by the trade name Crystex OT33 from Solutia);

(iv) sulphur donors such as, for example, caprolactam disulphide (CLD), bis[(trialcoxysilyl)propyl]polysulphides, dithiophosphates; or mixtures thereof.

The vulcanising agent (F) is preferably used together with adjuvants such as activators, vulcanisation accelerants and/or retardants known to the man skilled in the art.

Vulcanisation activators that are particularly effective are zinc compounds. In particular, ZnO, $ZnCO_3$, zinc salts of saturated or unsaturated fatty acids containing from 8 to 18 carbon atoms, are used. For example, zinc stearate is used, preferably formed in situ in the elastomeric composition, by ZnO and fatty acid, or magnesium stearate, formed by MgO, or mixtures thereof.

Said vulcanisation activators are preferably used in the elastomeric composition in an amount of from about 0.5 phr to about 10 phr. More preferably, said vulcanisation activators are used in the elastomeric composition in an amount of from about 1 phr to 5 phr. Even more preferably, said vulcanisation activators are used in the elastomeric composition in an amount of from about 1.5 phr to 3.5 phr.

An example of activator is the product Aktiplast ST marketed by Rheinchemie.

Preferably, the elastomeric composition may further comprise at least one vulcanisation accelerant. Vulcanisation accelerants that are commonly used may be for example selected from dithiocarbamates, guanidines, thioureas, thiazoles, sulphenamides, sulphenimides, thiurams, amines, xanthates, or mixtures thereof.

An example of vulcanisation accelerant is the N-cyclohexyl-2-benzothiazyl-sulfenamide Vulkacit® CZ/C marketed by Lanxess.

Said vulcanisation accelerants are preferably used in the elastomeric composition in an amount of from about 0.05 phr to about 10 phr.

More preferably, said vulcanisation accelerants are used in the elastomeric composition in an amount of from about 0.1 phr to about 5 phr.

Even more preferably, said vulcanisation accelerants are used in the elastomeric composition in an amount of from about 0.5 phr to about 3 phr.

The present elastomeric composition may optionally comprise one or more vulcanisation retardants such as, for example, N-cyclohexylthio phthalimide (VULKALENT G, - Lanxess).

Preferably, if present, said retardants are used in an amount of between 0.05 phr and 2 phr.

In the preparation of the present composition, the vulcanisation adjuvants are generally added during the mixing and dispersion step P1.

The elastomeric composition according to the invention may further comprise from 0.1 to 20 phr of a coupling agent (G).

Preferably, said coupling agent (G) is a silane coupling agent selected from those having at least one hydrolysable silane group which can be identified, for example, by the following general formula (I):

$$(R')_3Si\text{-}C_nH_{2n}\text{-}X \qquad (I)$$

wherein the R' groups, equal or different from each other, are selected from: alkyl, alkoxy or aryloxy groups or from halogen atoms, provided that at least one of the R' groups is an alkoxy or an aryloxy group; n is an integer of between 1 and 6, ends included; X is a group selected from: nitrose, mercapto, amino, epoxide, vinyl, imide, chloro, $-(S)_m C_n H_{2n}\text{-}Si\text{-}(R')_3$ and -S-COR', wherein m and n are integers of between 1 and 6, ends included and the R' groups are as defined above. Among the silane coupling agents, bis(3-triethoxysilylpropyl)tetrasulphide and bis(3-triethoxysilylpropyl)disulphide are particularly preferred. Said coupling agents may be used as such or as a suitable mixture with an inert filler (such as carbon black) so as to facilitate their incorporation into the elastomeric composition.

Preferably, said silane coupling agent is present in the elastomeric composition in an amount ranging between about 0.1 phr and about 10 phr, preferably between about 0.5 phr and about 7 phr.

In the preparation of the present composition, the silane coupling agent is preferably added during the mixing and dispersion step P1.

An example of the silane coupling agent is TESPT: bis(3-triethoxysilylpropyl)tetrasulphide Si69 marketed by Evonik.

The elastomeric composition may comprise other commonly used additives, selected according to the specific application for which the composition is intended, for example anti-ageing agents, anti-reversion agents, adhesives, antiozonants, in particular of the p-phenylenediamine type, antioxidants, waxes, fibres (for example Kevlar® pulp), or mixtures thereof. Preferably, said additives are added during the mixing and dispersion step P1.

Preparation of the composition

The elastomeric composition for tyres according to the invention is obtainable according to a process (P) which comprises at least one mixing and dispersion step (P1) to give a first elastomeric composition followed by at least one reworking step (P2),

wherein the mixing and dispersion step (P1) comprises

- feeding at least one mixing apparatus, comprising at least one discontinuous mixer and/or at least one continuous mixer, at least:

    one quantity X1 of the liquid polymer (A), wherein $0 \le X1 \le X$,
    one quantity Y1 of the resin (B), wherein $0 \le Y1 \le Y$,
    the solid diene elastomeric polymer (D),
    the reinforcing filler (E);

- mixing and dispersing said components, to give said first elastomeric composition;
- possibly unloading said first elastomeric composition from said mixing apparatus;
  and wherein the reworking step (P2) comprises
- feeding, to at least one continuous mixer, said first elastomeric composition and, possibly,

    one quantity X2 of the liquid polymer (A), wherein $0 \le X2 \le X$,
    one quantity Y2 of the resin (B), wherein $0 \le Y2 \le Y$,

    wherein X1 + X2 = X and Y1 + Y2 = Y,
- mixing said first elastomeric composition and dispersing therein the liquid polymer (A) and/or the resin (B) possibly fed in step (P2), by means of said at least one continuous mixer, preferably by applying, to said continuous mixer, a suction pressure (Pa) less than about 150 mbar in a manner so as to obtain said elastomeric composition; and
- unloading said elastomeric composition from said at least one continuous mixer.

Preferably, the quantity X1 of the liquid polymer (A) is equal to the total quantity X of liquid polymer (A) and/or the quantity Y1 of the resin (B) is equal to the total quantity Y of resin (B).

OTHER DEFINITIONS

For the purpose of the present description and the following claims, the term "mixer or mixing device" means a device able to substantially mix the ingredients of a solid elastomeric composition, especially under cold-feeding conditions, and to chew the elastomeric material, thereby raising the temperature thereof in order to make it workable and plastic to facilitate the incorporation and/or distribution of the ingredients within the elastomeric matrix.

As better explained hereinafter, other devices commonly used in the working of elastomers, such as finite element making devices, such as single screw extruders; conveyor devices (conveyors), such as extruders/transporters (conveyors, Batch-off); open roller mixers, are not considered adequate for the purposes of the present invention due to their limited ability to incorporate and disperse the components. Particularly in the case of viscous solid elastomers incorporating large amounts of reinforcement materials, such are the present compounds for tyre components, such devices are generally not able to produce an effective mixing of the components.

In the present description, the term "discontinuous or batch mixer" means a mixing device adapted to be periodically fed with the elastomeric composition components in predefined amounts (batches) and mix them for a predetermined time so as to obtain the elastomeric composition. At the end of mixing, the resulting elastomeric composition is fully unloaded from the mixing device in a single solution. For the purpose of the present description and of the following claims, the term "continuous mixer" means a mixing device suitable for receiving the ingredients of an elastomeric composition as a continuous feeding, mixing and/or reworking them in order to produce and unload an elastomeric composition in a continuous stream (except for possible stops of the mixing device due to maintenance, or elastomeric composition recipe change) in contrast to the periodic loading/unloading of the batch mixing device. Generally, the continuous mixer is a closed system, with the exception of the parts for loading the components and unloading the composition.

The continuous mixer is able to substantially mix the ingredients of an elastomeric composition, especially under cold-feeding/dosing conditions, and to chew the elastomeric material, thereby raising the temperature thereof in order to make it workable and plastic to facilitate the incorporation and/or distribution of the ingredients within the polymeric matrix.

The continuous mixer is able to effectively mix the composition even in a single transit of the material. The continuous mixer is therefore mainly provided with mixing portions able to impart a high shear stress to the composition, and with any redistribution portions. The continuous mixer is further provided with transport portions capable of carrying the composition being worked from one longitudinal end to the other one of the inner chamber.

The continuous mixer as understood herein is therefore a device suitable for effectively mixing viscous elastomeric materials, such as compounds for tyre components, such as treads.

Surprisingly, the first reworking step (P2) of the first elastomeric composition in continuous mixer, preferably under high vacuum, imparts unpredictable properties to the specific composition of the invention which cannot be achieved by adopting conventional mixing processes.

Examples of continuous mixing devices are continuous twin-screw or multi-screw (e.g. ring mixers), penetrating and co-rotating, or planetary mixing devices.

The term "high vacuum" means a suction pressure applied to the continuous mixer lower than 150 mbar, preferably lower than 100 mbar, more preferably lower than 50 mbar or 40 mbar.

The term 'planetary mixer' means a continuous mixing device having a central rotor and a plurality of satellites mixers, each of which, driven by the central rotor, rotates simultaneously about its own axis and about the central rotor.

Both the discontinuous mixer and the continuous mixer, although with different efficacy and effects, are able to impart sufficient energy to the elastomeric composition to mix and disperse the charge in the elastomeric polymer even in case of cold feeding, unlike other elastomeric composition handling devices, such as conveyor devices and devices for manufacturing a semi-finished product as set out hereinafter, which for the purposes of the present invention are not considered mixers.

The term 'conveyor device' ('conveyor') means a device that exerts a continuous transportation of the elastomeric composition through its length and imparts an appropriate shape to the output composition for subsequent handling or storage. Examples of conveyors are unloading devices ('batch-off') from batch mixing devices. Conveyor devices typically comprise elements that mainly favour the axial movement of the material, such as helical screws.

The term 'device for manufacturing a semi-finished product or extruder' means a device that can be fed, for example continuously, with an elastomeric composition and can unload a continuous strip of said elastomeric composition, imparting predefined shape and dimensions thereto, such as desired shape and dimensions for the incorporation in the green tyre, such as a tread band.

In the present description, the term green is generally used to indicate a material, a composition, a component or a tyre not yet vulcanised.

Examples of devices for manufacturing a semi-finished product or extruders are single screw extruders having an extrusion head or calender in output.

It is understood from the foregoing that the conveyor devices and the devices for manufacturing a semi-finished product, while exerting a mild mixing action under certain conditions, are not able to provide the composition with sufficient energy to disperse the charges in the elastomeric polymer or to substantially mix the components of an elastomeric composition so as to form a composition starting from the basic ingredients thereof, especially under cold feeding conditions, being limited to transportation and/or conformation of the composition being fed.

Also open roll mixing devices are not able to effectively mix the present elastomeric materials.

Such devices are typically used as sheeting elements to impart the shape of a strip or sheet to the compound mass unloaded from other mixing devices (such as internal mixers), which is more manageable in the subsequent steps.

Such devices are therefore not covered by the present definition of continuous mixers.

Preferably, the mixing and dispersion step (P1) of the present process is carried out with a mixing apparatus comprising at least one discontinuous mixer selected from an internal mixer (closed) or an open mixer.

Generally, said discontinuous mixer includes a pair of tangential or penetrating rotors.

Generally, said discontinuous mixer includes a mixing chamber wherein a pair of rotors rotating in mutually opposite directions is accommodated, in such a way as to mix the components introduced in the mixing chamber from the top thereof.

To this end, the discontinuous mixer may be provided with a pneumatic or hydraulic cylinder positioned at the top of the mixing chamber and a piston that moves both upwards, to open the mixing chamber, thereby allowing the introduction of ingredients of the composition by specific loading hoppers, and downwards, so as to exert pressure on the material being worked in the mixing chamber and located above the pair of rotors.

A pneumatic or hydraulic system positioned on the bottom of the mixing chamber enables the unloading of the elastomeric composition at the end of the mixing cycle through the opening of a dedicated inlet.

Specific examples of discontinuous mixers that can be advantageously used according to the present invention are of the closed (Banbury®, Intermix®) or open (open mill or Z-blade) type.

Typically, the mixing and dispersion step (P1) comprises one or more non-productive steps in which all components except those able to promote the crosslinking (such as sulphur and accelerants) are fed to the batch mixing device, and a production step in which the elastomeric composition obtained from the first step, as well as the components able to promote the crosslinking, are fed to the batch mixing device, so as to provide the first elastomeric composition described above in the form of final (vulcanisable) composition.

Alternatively, the components able to promote the crosslinking are fed to a batch mixing device in a step subsequent to the reworking step (P2), allocating the obtaining of the final (vulcanisable) composition to this final mixing step.

Preferably, said mixing step (P1) is carried out using one or more discontinuous mixers.

The mixing and dispersion step (P1) can be carried out using a single discontinuous mixer or one or more different or equal mixers.

Said mixing step may be carried out in a single or multiple mixing sub-steps carried out in the same discontinuous mixer or in different mixers, preferably in two or three or more subsequent mixing sub-steps in the same single discontinuous mixer or in different mixers.

For example, in the case of a single mixing step (P1), all the components of the first elastomeric composition are added together and mixed at temperatures of the material being worked lower than 110 °C to give the first elastomeric composition, then fed to the continuous mixer, possibly together with the remaining part of the liquid polymer (A) and/or of the resin (B) and/or of any oil (C), and reworked (step P2), preferably under high vacuum.

Alternatively, if the mixing process (P1) comprises two sub-steps, the solid diene elastomeric polymer (D), the reinforcing filler (E) are for example fed and mixed in a discontinuous mixer, preferably at temperatures of the material being worked of between 130 °C and 150 °C. The mixture unloaded from

the discontinuous mixer is fed back to the same discontinuous mixer or to a different mixer, along with the vulcanising agent (F) and preferably at least part of the liquid polymer (A) and/or of the resin (B) and/or of any oil (C), the coupling agent (G) and any activating agents, accelerants and/or retardants for the vulcanisation and additives and mixed at temperatures of the material being worked lower than 110 °C, preferably of between 90 °C and 110 °C.

Alternatively, if the mixing process P1 includes three mixing sub-steps, the diene elastomeric polymer (D) and the reinforcing filler (E) and preferably at least part of the liquid polymer (A) and/or of the resin (B) and/or of any oil (C), the coupling agent (G), are first fed and mixed in the discontinuous mixer, preferably at temperatures of the material to be worked of between 130 °C and 150 °C.

The mixture unloaded from the discontinuous mixer is fed back to the same discontinuous mixer or to a different mixer along with any other additives (antioxidants, anti-ozonants, zinc oxide, etc.) and mixed at temperatures of the material being worked of between 100 °C and 130 °C.

The mixture unloaded from the discontinuous mixer is fed back to the same discontinuous mixer or to a different mixer, for example along with the vulcanising agent (F) and any activating agents, accelerants and/or retardants for the vulcanisation, and mixed at temperatures of the material being worked lower than 110 °C, preferably of between 90 °C and 110 °C.

The mixture unloaded from the discontinuous mixer can be finally fed directly to the continuous mixer, possibly together with the remaining part of the liquid polymer resin (A) and/or the resin (B) and/or any oil (C), and reworked (step P2).

Preferably, the mixing in said first and/or second and/or third discontinuous mixing device is carried out at a rotor speed higher than about 10 revolutions per minute (rpm) and/or lower than about 80 rpm, more preferably between about 30 and about 70 rpm.

Preferably, the mixing in said first and/or second and/or third discontinuous mixing device is carried at a rotor speed of between 10 rpm and 60 rpm, preferably between 20 rpm and 50 rpm in the case of a closed mixer; at a rotor speed of between 10 rpm and 40 rpm, preferably between 10 rpm and 30 rpm in the case of an open mixer.

Preferably, the mixing in said first and/or second and/or third discontinuous mixing device is carried out with a filling factor of the mixing chamber (the filling factor is the total free volume fraction of the mixing chamber occupied by the material to be mixed) not higher than about 80%, preferably from about 55% to about 70%. If a too high filling factor is selected, the lack of free volume prevents the movement and remixing of the material and proper mixing becomes impossible. Likewise, if a very small filling factor is selected, it is difficult to ensure adequate mixing, with high shear forces and adequate homogenisation of material into the mixing chamber.

Preferably, the mixing in said first and/or second and/or third discontinuous mixing device is carried out for, each sub-step, for a time of between 50 and 600 seconds, more preferably between 100 and 400 seconds.

Alternatively, at least one mixing and dispersion step (P1) can be carried out with a continuous mixer. Preferably, the mixing in said first and/or second and/or third discontinuous mixing device or in said at least one continuous mixing device is carried out at ambient pressure.

Preferably, the mixing in said first and/or second and/or third discontinuous mixing device - if sealed - or in said at least one continuous mixing device is carried out at a pressure in the mixing chamber lower the ambient pressure, preferably comprised between the ambient pressure (1000 mbar) and 900 mbar.

Preferably, the mixing and dispersion step (P1) is carried out in two or three subsequent mixing sub-steps in a single mixer, after unloading, cooling and feeding of the intermediate compositions. Preferably, the mixing and dispersion step (P1) is carried out in two or three subsequent mixing sub-steps in two or three continuous and/or discontinuous mixers.

Preferably, the mixing and dispersion step (P1) is carried out in three subsequent mixing sub-steps in one or more discontinuous mixers, preferably internal mixers with tangential screws (Banbury® type) or penetrating screws (Intermix® type).

The first elastomeric composition is obtained at the end of the mixing and dispersion step (P1).

The expression "first elastomeric composition" means a composition which comprises at least the solid diene elastomeric polymer (D) and the reinforcing filler (E). Optionally, the first elastomeric composition may further comprise the essential components for vulcanisation, i.e. the vulcanising agent (F) and preferably adjuvants and/or retardants for the vulcanisation, which make it substantially already vulcanisable.

Optionally, such a first elastomeric composition can further comprise, at least in part, the liquid polymer (A) and/or the resin (B), any oil (C), and any other components such as the coupling agent (G), or other additives.

Preferably, the first elastomeric composition comprises all the components of the final vulcanisable elastomeric composition. In that case, step P2 in continuous mixer, preferably under high vacuum, will be a reworking step only.

Alternatively, the first elastomeric composition does not comprise all the components of the final composition, the liquid polymer resin (A) and/or the resin (B) and/or any oil (C) being able to be added, in whole or in part, during step P2.

If after step P2, a further mixing step is carried out in a batch mixer, the essential ingredients for vulcanisation, i.e. the vulcanising agent (F) and preferably adjuvants and/or retardants for the vulcanisation can advantageously be introduced in such a further production step of the final elastomeric composition.

Preferably, the mixing and dispersion step (P1) further comprises cooling said first elastomeric composition to a temperatures of from 15 °C to 40 °C, more preferably from 20 °C to 30 °C, before feeding it to said continuous mixing device for the reworking step (P2).

Advantageously, cooling said first elastomeric composition allows preventing scorching of the composition itself during the subsequent reworking (P2).

In the present process, the first elastomeric composition obtained in step (P1) is then fed to at least one continuous mixer for the reworking step (P2).

Specific examples of continuous mixers that can be advantageously used for the reworking step (P2) are of the twin screw or multiple screws type, co-rotating, interpenetrating, self-cleaning or of the planetary roll mixer type.

Typically said screws, in the case of multi-screw or satellite or twin-screw continuous mixer, or in the case of planetary continuous mixer, comprise chewing compression and/or cutting elements and transport elements. Moreover, the screws or satellites may comprise one or more toothed or geared elements; flow limiters; flow control devices. Preferably, said continuous mixing device is of multi-screw type (i.e. comprising more than two screws), such as for example ring mixers having at least four screws, typically ten or twelve, arranged regularly spaced apart on a circle.

Preferably, said continuous mixing device is of self-cleaning type, i.e. the mixing elements of each screw are substantially completely penetrating into the mixing elements of the adjacent rotating screw, thereby allowing the self-cleaning of the device.

Preferably, the reworking step (P2) in said continuous mixing device is carried out by applying a specific energy of at least about 0.1 kWh/kg, more preferably at least about 0.2 kWh/kg and/or no higher than about 0.6 kWh/kg, more preferably no higher than about 0.4 kWh/kg.

Preferably, the reworking step (P2) in said continuous mixing device is carried out at a speed of rotation of the screws, in the case of multi-screw or twin-screw device, or of the central rotor, in the case of planetary mixer, from about 60 to about 300 rpm, more preferably between 80 and 105 rpm.

In a preferred embodiment, the L/D ratio (length/diameter of the screw) is of between 16 and 64, preferably between 24 and 48.

According to a particular embodiment, the first elastomeric composition obtained in step (P1) is fed to a conveyor device before being fed to the continuous mixing device for the reworking of step (P2). Feeding to said conveyor can allow controlling the feeding rate of the first elastomeric composition towards said continuous mixing device.

Preferably, said conveyor is of the helical single-screw or counter-rotating helical twin-screw type. Preferably, the speed of said screw or said screws of the conveyor device is of between 10 rpm and 60 rpm, more preferably between 20 rpm and 35 rpm.

Preferably, the reworking step (P2) in said continuous mixing device is carried out at said a suction pressure Pa lower than 100 mbar, more preferably lower than 50 mbar or 40 mbar.

According to the Applicant, the suction may extract any solvents and/or cooling water and/or substances generated during mixing (reactive mixing) and/or additives that improve the workability of the composition precursor but that are undesired in the finished product. For example, in the case of compositions for the production of treads provided with reinforcing fillers based on silica and a silane coupling agent, the suction extracts the ethanol produced by the silica-silane interaction.

Preferably, the reworking step (P2) in said continuous mixing device is carried out at a temperature of the material being worked lower than 120 °C, preferably between 90 °C and 110 °C.

Preferably, the reworking step (P2) in said continuous mixing device is carried out with an average filling degree of said mixer of between 1 0% and 50%.

"Average filling degree" means the average ratio of the volume occupied by the elastomeric material in the mixing chamber, delimited by the mixing screws and by the inner walls of the seat of such screws into the mixer, to the total volume of such a chamber. The average filling degree is indicative of the ability of the continuous mixer to treat the amount of material that it receives in input.

Preferably, the reworking step (P2) in said continuous mixing device may have a productivity of between 700 and 4000 Kg/h

Preferably, a further mixing may be carried out downstream of the reworking step (P2), using a discontinuous mixer, such as a Banbury.

Preferably, the final elastomeric composition at the end of the mixing steps is extruded in the form of sheet or tape.

The final elastomeric composition is then unloaded, preferably using a conveyor device, and typically unloaded from the conveyor in the form of a sheet, pumping it through an extrusion nozzle or a roller nozzle. The resulting sheet is usually subjected to a cooling treatment, generally by using water and/or forced air. The sheet thus treated is then usually placed on benches or coils awaiting further working. Typically, the final elastomeric composition can be fed to a device for manufacturing a semi-finished product, such as a single screw short cylinder extruder with hot feeding, so as to obtain the tyre component, preferably the tread band.

The second aspect of the present invention consists of a process for the preparation of an elastomeric composition for tyres for vehicles comprising at least

one quantity X equal to at least 1 phr of at least one liquid polymer (A),

one quantity Y equal to at least 1 phr of at least one resin (B),

100 phr of at least one solid diene elastomeric polymer (D),

at least 30 phr of at least one reinforcing filler (E),

according to the first aspect of the invention,

which comprises at least a mixing and dispersion step (P1) to give a first elastomeric composition followed by at least one reworking step (P2),

wherein the mixing and dispersion step (P1) comprises

- feeding at least one mixing apparatus, comprising at least one discontinuous mixer and/or at least one continuous mixer, at least:

  one quantity X1 of the liquid polymer (A), wherein $0 \leq X1 \leq X$,
  one quantity Y1 of the resin (B), wherein $0 \leq Y1 \leq Y$,
  the solid diene elastomeric polymer (D),
  the reinforcing filler (E);

- mixing and dispersing said components, to give said first elastomeric composition;

- possibly unloading said first elastomeric composition from said mixing apparatus;
  and wherein the reworking step (P2) comprises
- feeding, to at least one continuous mixer, said first elastomeric composition and, possibly, one quantity X2 of the liquid polymer (A), wherein $0 \leq X2 \leq X$, one quantity Y2 of the resin (B), wherein $0 \leq Y2 \leq Y$, wherein $X1 + X2 = X$ and $Y1 + Y2 = Y$,
- mixing said first elastomeric composition and dispersing therein the liquid polymer (A) and/or the resin (B) possibly fed in step (P2), by means of said at least one continuous mixer, preferably by applying, to said continuous mixer, a suction pressure (Pa) less than about 150 mbar in a manner so as to obtain said elastomeric composition; and
- unloading said elastomeric composition from said at least one continuous mixer.

Preferably, in the process according to the second object of the invention, mixing by means of the The third aspect of the present invention consists of a final elastomeric composition comprising an elastomeric composition for tyres according to the first aspect of the invention and further:

- at least 0.05 phr of at least one vulcanising agent (F); and preferably
- from 0.5 to 10 phr of at least one activating agent for the vulcanisation; and/or
- from 0.05 to 10 phr of at least one accelerant for the vulcanisation, and/or
- from 0.05 to 2 phr of at least one retardant for the vulcanisation, and/or
- from 0.1 to 20 phr of at least one coupling agent (G).

The fourth aspect of the present invention consists of a component for tyres for vehicles comprising a final elastomeric composition obtained by using the elastomeric composition according to the invention.
The elastomeric composition according to the invention is preferably used for the manufacture of tread bands for vehicle tyres according to traditional processes.
The fifth aspect of the present invention consists of a tyre for vehicles comprising a tyre component, preferably a tread band, comprising a final vulcanised elastomeric composition obtained by using the elastomeric composition according to the invention.
Preferably, the tyre according to the invention comprises

- one carcass structure comprising at least one carcass layer having opposite lateral edges associated with respective bead structures including at least one anchoring annular element and at least one bead filler;
- one belt structure comprising at least one belt layer applied in radially outer position with respect to the carcass structure;
- one tread band applied in radially outer position with respect to said belt structure;
  where said tread band comprises a vulcanised elastomeric composition obtained by vulcanising a final elastomeric composition obtained using the elastomeric composition according to the first aspect of the invention.

Preferably, the tyre according to the invention is a winter or snow tyre.
Preferably, the tyre according to the invention is an all season tyre.
Preferably, the tyre according to the invention is a tyre for high or very high performance (HP, UHP, SUV) vehicles.
Preferably, the tyre according to the invention is a tyre for automobiles.
The tyre according to the invention may be a tyre for heavy vehicles or motorcycles.
The tyre according to the invention can be manufactured according to a process comprising:

a) producing a green tyre comprising a tread band applied to a radially outer position of the tyre;
b) subjecting said green tyre to moulding and vulcanisation in order to obtain a finished tyre,
wherein said tread band comprises a final elastomeric composition obtained using the elastomeric composition according to the invention.

Preferably, said green tread band comprises at least 50%, preferably at least 70% or 90% or 95% or 1 00% of an elastomeric composition according to the invention.
The Applicant has found that the peculiar properties of the elastomeric composition for tread band of the invention - achievable due to the composition of the plasticising mixture together with the specific mixing process applied - allow producing, with high productivity, a winter or all-season tyre characterised by the simultaneous improvement of the driving performance on snow and of wet and dry behaviour, reaching an optimum balance of notoriously conflicting properties.

BRIEF DESCRIPTION OF THE DRAWINGS

With reference to the accompanying figures:

- Figure 1 schematically shows a semi-sectional view of a tyre for vehicle wheels obtained according to the present invention;
- Figure 2 shows a diagram of an exemplary plant for producing an elastomeric composition according to the present invention;
- Figure 3 shows a diagram of another exemplary plant for producing an elastomeric composition according to the present invention;
- Figure 4 shows a diagram of another exemplary plant for producing an elastomeric composition according to the present invention;
- Figure 5 shows a schematic lateral view of a continuous mixer of the plant in figures 2, 3 and 4;
- Figure 6 shows a schematic front and sectional view of the continuous mixer in figure 5.

DESCRIPTION OF EXAMPLARY EMBODIMENTS OF THE INVENTION

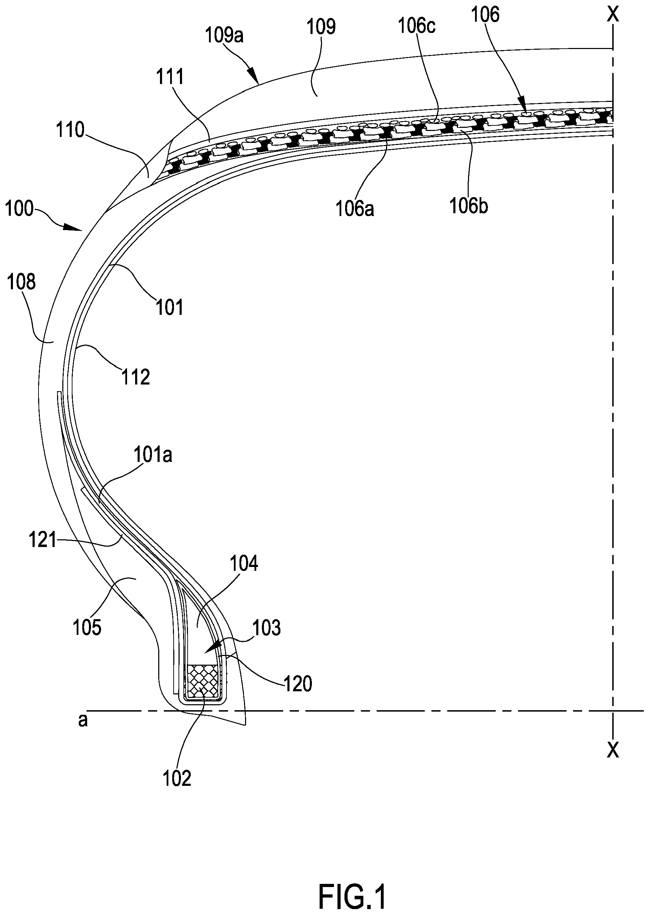

Figure 1 shows an exemplary tyre manufactured by the process according to the present invention. With reference to figure 1, "a" denotes an axial direction and "x-x" trace of an equatorial plane of the tyre, indicates a radial direction. For simplicity, figure 1 shows only a portion of the tyre, the remaining portion not shown being identical and arranged symmetrically with respect to the radial direction "x-x". Reference numeral (100) in figure 1 denotes a winter or all season tyre for vehicle wheels produced according to the process according to the invention and formed by a plurality of structural elements. Tyre (100) for four-wheeled vehicles comprises at least one carcass structure, comprising at least one carcass layer (101) having respectively opposite end flaps engaged with respective annular anchoring structures (102), referred to as bead cores, possibly associated to a bead filler (104). The tyre area comprising the bead core (102) and the filler (104) forms a reinforcement annular structure (103), the so-called bead, intended for anchoring the tyre onto a corresponding mounting rim, not shown.

The carcass structure is usually of radial type, i.e. the reinforcement elements of the at least one carcass layer (101) lie on planes comprising the rotational axis of the tyre and substantially perpendicular to the equatorial plane of the tyre. Said reinforcement elements may consist of textile cords, such as rayon, nylon, polyester (for example polyethylene naphthalate, PEN) or metal cords. Each reinforcement annular structure is associated to the carcass structure by folding back of the opposite lateral edges of the at least one carcass layer (101) around the annular anchoring structure (102) so as to form the so-called carcass flaps (101a) as shown in Figure 1.

In one embodiment, the coupling between the carcass structure and the reinforcement annular structure can be provided by a second carcass layer (not shown in Figure 1) applied in an axially outer position with respect to the first carcass layer.

An anti-abrasive strip (105) is arranged in an outer position of each reinforcement annular structure (103). Preferably, each anti-abrasive strip (105) is arranged at least in an axially outer position to the reinforcement annular structure (103) extending at least between the sidewall (108) and the portion radially below the reinforcement annular structure (103).

Preferably, the anti-abrasive strip (105) is arranged so as to enclose the reinforcement annular structure (103) along the axially inner and outer and radially lower areas of the reinforcement annular structure (103) so as to interpose between the latter and the wheel rim when the tyre (100) is mounted to the rim.

The carcass structure is associated to a belt structure (106) comprising one or more belt layers (106a), (106b) placed in radial superposition with respect to one another and with respect to the carcass layer, having typically metallic reinforcement cords. Such reinforcement cords may have crossed orientation with respect to a direction of circumferential development of the tyre (100). By "circumferential" direction it is meant a direction generally facing in the direction of rotation of the tyre.

At least one zero-degree reinforcement layer (106c), commonly known as a "0° belt", may be applied in a radially outermost position to the belt layers (106a), (106b), which generally incorporates a plurality of metallic or textile reinforcement cords, optionally combined with one another, oriented in a substantially circumferential direction, thus forming an angle of a few degrees (such as an angle of between about 0° and 6°) with respect to the equatorial plane of the tyre, and coated with an elastomeric material.

A tread band (109) is applied in position radially outer to the belt structure (106) comprising a final vulcanised elastomeric composition obtained using the elastomeric composition according to the invention according to claim 1.

Moreover, respective sidewalls (108) of elastomeric material are further applied in an axially outer position on the lateral surfaces of the carcass structure, each extending from one of the lateral edges of the tread (109) at the respective reinforcement annular structure (103).

In a radially outer position, the tread band (109), the composition of which is produced by the process described above, has a rolling surface (109a) intended to come into contact with the ground. In the case of tyres for use on dry track, the rolling surface is smooth as shown in figure 1. For conventional road tyres or for use on a wet or rain track, circumferential and/or transverse grooves and indentations are typically made (not shown in figure 1).

An under-layer (111) is arranged between the belt structure (106) and the tread band (109).

A strip consisting of elastomeric material (110), commonly known as "mini-sidewall", can optionally be provided in the connecting zone between the sidewalls (108) and the tread band (109), this mini-sidewall being generally obtained by co-extrusion with the tread band (109) and allowing an improvement of the mechanical interaction between the tread band (109) and the sidewalls (108). Preferably, the end portion of the sidewall (108) directly covers the lateral edge of the tread band (109). Typically, a rubber layer (112), generally known as "liner", which provides the necessary impermeability to the inflation air of the tyre, can also be provided in a radially inner position with respect to the carcass layer (101).

The reinforcement annular structure (103) of the tyre may comprise a further protective layer which is generally known by the term of "chafer" (121) or protective strip and which has the function of increasing the rigidity and integrity of the bead structure (103).

Chafer 121 usually comprises a plurality of cords incorporated in a cross-linked elastomeric material and which are generally made of textile materials (such as aramid or rayon) or of metallic materials (such as steel cords).

The rigidity of the tyre sidewall 108 can be improved by providing the reinforcement annular structure (103) with a reinforcement layer (120) generally known as "flipper" or additional strip-like insert.

The flipper (120) is a reinforcement layer which is wound around the respective anchoring annular structure (102) and the bead filler 104 so as to at least partially surround them, said reinforcement layer being arranged between the at least one carcass layer 101 and the reinforcement annular structure 103 . Usually, the flipper is in contact with said at least one carcass layer 101 and said reinforcement annular structure 103.

Flipper 120 typically comprises a plurality of metallic or textile cords incorporated within a cross-linked elastomeric material.

The building of the tyre (100) as described above, can be carried out by assembling respective semi-finished products adapted to form the components of the tyre, on a forming drum, not shown, by at least one assembling device.

At least a part of the components intended to form the carcass structure of the tyre can be built and/or assembled on the forming drum. More particularly, the forming drum is intended to first receive the possible liner, and then the carcass structure. Thereafter, devices non shown coaxially engage one of the annular anchoring structures around each of the end flaps, position an outer sleeve comprising the belt structure and the tread band in a coaxially centred position around the cylindrical carcass sleeve and shape the carcass sleeve according to a toroidal configuration through a radial expansion of the carcass structure, so as to cause the application thereof against a radially inner surface of the outer sleeve.

After the building of the green tyre, a moulding and vulcanisation treatment is generally carried out in order to determine the structural stabilisation of the tyre through cross-linking of the elastomeric compositions, as well as to impart a desired tread pattern on the tread band and to impart any distinguishing graphic signs at the sidewalls.

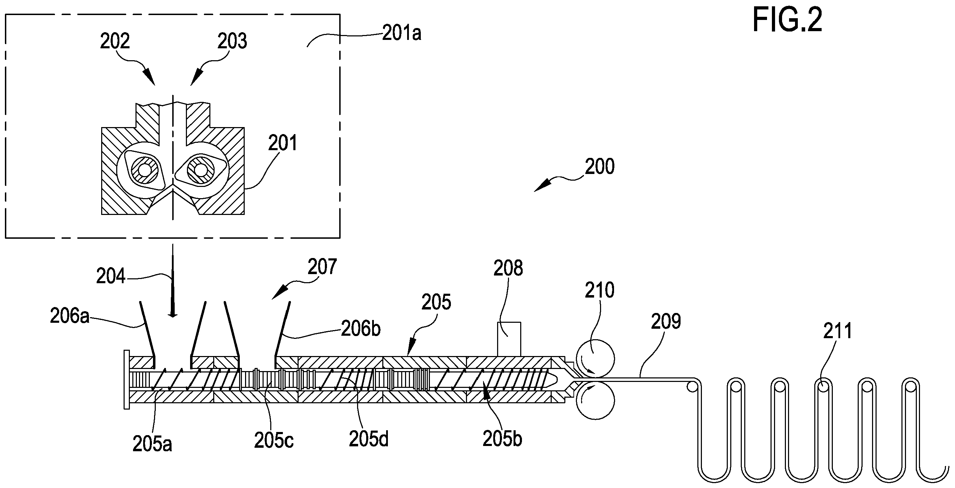

With reference to figure 2, the plant (200) for manufacturing a tread band composition according to the process of the present invention includes a mixing apparatus (201a) comprising at least one discontinuous mixer (201) (such as a Banbury®) where the mixing and dispersion step (P1), including one or more sub-steps, is carried out.

The components of the elastomeric composition (202) (203) are fed to the discontinuous mixer (201), all together from the beginning or separately during multiple subsequent mixing, in whole or in part - in the case of the liquid polymer (A) and/or the resin (B) and/or of any oil (C) - as described above. The above subsequent mixing steps are carried out in the discontinuous mixer (201).

Preferably, the optional components not mentioned above - such as coupling agents, accelerants, retardants and various additives - are added in the mixing and dispersion step (P1).

Alternatively, said mixing steps may be carried out in succession in the first discontinuous mixer (201) and in a second discontinuous mixer (not shown in figure 2).

According to a preferred embodiment, said mixing apparatus (201a) comprising at least one discontinuous mixer (201), preferably an internal mixer, further comprises at least one open mixer (not shown in figure 2) preferably being located downstream of said internal mixer (201).

After having mixed and dispersed the components of the first elastomeric composition (204), this is unloaded from the mixing apparatus (201a) and fed to a continuous mixer (205) (such as a twin-screw co-rotating extruder) through a feeding power (206a) (reworking step P2).

Preferably, said first elastomeric composition (204) can be obtained in the form of a product divided for example by means of a grinding device (not shown in figure 2). Preferably, said first elastomeric composition (204) can be cooled below 110-100 °C, preferably close to room temperature (such as at temperatures of between 20 °C and 40 °C), making it pass through a cooling device (not shown in figure 2) before being fed to said continuous mixer (205).

The continuous mixer (205) shown in figure 2 comprises a cylindrical chamber (205a) within which a pair of endless screws (205b) rotates (for example, two counter-rotating interpenetrating screws of which only one is visible in figure 2). Figure 2 shows the mixing and redistribution portions (205c) of the screw (205b) capable of imparting a high shearing force to the composition and the axial conveying portions (205d).

The liquid polymer (A) and/or the resin (B) and/or any oil (c) (207) can be fed together with said first elastomeric composition through the hopper (206a) or through a second feeding hopper (206b).

The continuous mixer (205) is provided with a suction unit (208) to allow the suction of fluids and gases that may develop during the mixing of the elastomeric composition, preferably under high vacuum. Preferably, multiple suction units can be present along the continuous mixer (205) (not shown in figure 2).

The suction units are connected with high vacuum pumps (not shown) which preferably apply a suction pressure of 150 mbar or less.

After having carried out the mixing, the tread composition (209) is discharged from the continuous mixer (205), for example in the form of a continuous strip, by pumping it through an extrusion roller die (210), for example by means of a gear pump (not shown in figure 2), and is subsequently cooled, preferably to room temperature, by passing it through a cooling device (211).

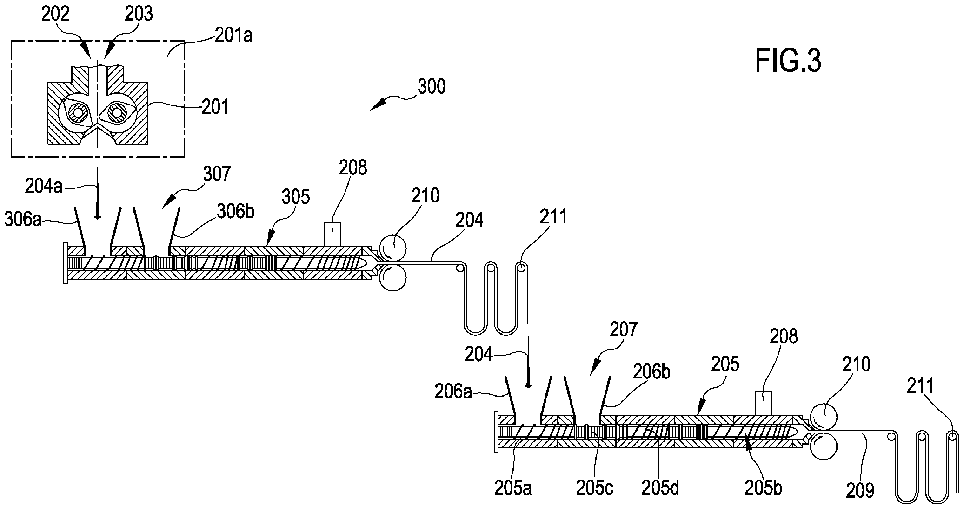

Figure 3 shows a plant (300) for the production of a tread composition according to the process of the present invention: identical reference numerals have the same meanings shown in figure 2.

It should be understood that all of the alternatives described above with reference to figure 2 also apply with reference to figure 3.

With reference to figure 3, the plant (300) for the production of an elastomeric composition according to the process of the present invention includes a mixing apparatus (201a) comprising a discontinuous mixer (201) as described above in figure 2 in which at least the elastomeric polymer (D), the reinforcing filler (E), the vulcanising agent (F) and, in full or in part, the liquid polymer (A) and/or the resin (B) and/or any oil (C) (202) are fed.

A first elastomeric composition (204a) is obtained, in this process embodiment, during the first mixing step and can be fed to a first continuous mixer (305) (such as a twin-screw co-rotating extruder) through a feeding hopper (306a).

Preferably, said first elastomeric composition (204a) can be obtained in the form of a product divided as described above with reference to figure 2.

The first continuous mixer (305) in figure 3 shows a second feeding hopper (306b) for feeding the vulcanising agents (F) and/or the coupling agents (G), the activators and/or the accelerants and/or retardants (307).

Generally, the recipe ingredients are fed to different zones of the continuous mixer through one or more feeding hoppers (306b).

Preferably, each ingredient of the recipe is provided with a dedicated metering device (not shown in figure 3).

Preferably, a plurality of different ingredients of the recipe may be metered by means of the same metering device.

Preferably, the metering device is a gravimetric weight loss feeder.

After having carried out the second mixing, the first elastomeric composition (204) obtained is fed to a second continuous mixer (205) through a feeding hopper (206a) as described for figure 2, for the reworking step (P2).

Preferably, said first elastomeric composition (204) can be obtained in the form of a product divided by pumping the same through an extrusion head (not shown in figure 3), said extrusion head being provided with a perforated extruder provided with knives, by means of a gear pump (not shown in figure 3), through which the first elastomeric composition is passed.

The resulting product in divided form may subsequently be cooled, preferably close to room temperature (such as between 20 °C and 40 °C), for example by conveying it to a cooling device (not shown in figure 3).

The passage of the first elastomeric composition from the first to the second continuous mixer can be made according to any known process.

The first granulated elastomeric composition is conveyed, for example by means of a conveyor belt, to a gravimetric weight loss feeder (not shown in figure 3) which doses and feeds it to the second continuous mixer (205) through a feeding hopper (206a).

The second continuous mixer (205) in figure 3 shows a second feeding hopper (206b) for feeding possibly, in full or in part, the liquid polymer (A) and/or the resin (B) and/or any oil (C).

The continuous mixer (205) is provided with a suction unit (208) to allow the suction of fluids and gases that may develop during the mixing of the elastomeric composition, preferably under high vacuum. Preferably, multiple suction units can be present along the continuous mixer (205) (not shown in figure 2).

The suction units of the continuous mixer (205) are connected with high vacuum pumps (not shown) which preferably apply a suction pressure of 150 mbar or preferably less.

After having carried out the three mixing steps, the tread composition (209) is discharged from the second continuous mixer (205), for example in the form of a continuous strip, by pumping it through an extrusion roller die (210), for example by means of a gear pump (not shown in figure 3), and is subsequently cooled, preferably close to room temperature (such as between 20 °C and 40 °C), by passing it through a cooling device (211). Preferably, the continuous mixer (205) and/or (305) shown in figures 2 and 3 may be of the multi-screw ring or planetary roller type.

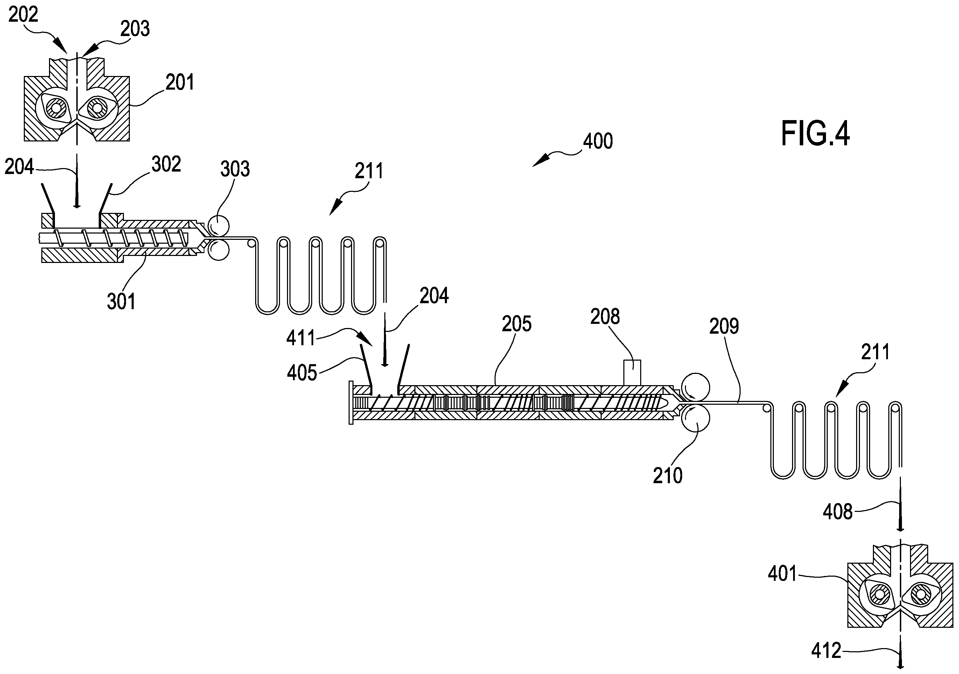

With reference to Figure 4, reference numeral (400) generally identifies a plant for the production of an elastomeric composition according to the present invention. Same reference numerals have the same meanings shown in figures 2 and 3.

It should be understood that all of the alternatives described above with reference to figures 2 and 3 also apply with reference to figure 4.

The plant (400) for producing an elastomeric composition includes a discontinuous mixing device (201) (such as a Banbury® mixer) wherein the mixing and dispersion step (P1) is carried out.

At least the elastomeric polymer (D), the reinforcing filler (E), possibly the vulcanising agent (F) and, in full or in part, the liquid polymer (A) and/or the resin (B) and/or any oil (C) are fed to the discontinuous mixer (201), all together from the beginning or separately during multiple subsequent mixing, as described above (202) (203).

The optional components not mentioned above - such as coupling agents (G), accelerants, retardants and various additives - may be added in the mixing and dispersion step (P1).

After the mixing (P1) has been carried out, the first elastomeric composition (204) is fed to the continuous mixer (205) (for example a self-cleaning twin-screw, co-rotating and penetrating extruder) through a feeding hopper (405).

According to the embodiment in Figure 4, the first elastomeric composition (204) of the first step is unloaded from the discontinuous mixer (201) to an optional conveyor device (301) (such as a single-screw helical extruder) through a feeding hopper (302).

The first elastomeric composition (204) is delivered by the conveyor device (301) for example in the form of a sheet or continuous tape, by pumping it through a roller or calender nozzle (303), for example by means of a gear pump (not shown in Figure 4).

Alternatively (not shown in Figure 4), the conveyor device (301) instead of the roller nozzle (303) can be provided with:

- an extrusion nozzle provided with a perforated extrusion plate provided with knives in order to obtain the first elastomeric composition of the first step in the form of a divided product before feeding it to the continuous mixer (205) (after possible storage);
- an open mouth in order to allow the first elastomeric composition of the first step of slide directly within the continuous mixer.

Alternatively, the conveyor device (301) may be replaced with an open mixer (not shown in Figure 4). Alternatively, an open mixer may be arranged between the discontinuous mixer (201) and the conveyor device (301) (not shown in Figure 4).

According to the particular embodiment in Figure 4, the first elastomeric composition (204) at the exit from the conveyor (301) is cooled, preferably to room temperature, by passing it through a cooling device (211), before being fed to the continuous mixing device (205). Said cooling may be useful in order to increase the viscosity of the first elastomeric composition before feeding it to said continuous mixer to allow better mixing of the first elastomeric composition within said continuous mixer (205). Alternatively (not shown), the first elastomeric composition (204), at the exit from the conveyor (301), after being cooled by passing it through the cooling device (211), can be transformed into a product divided by means of a cutting device (for example a mill provided with rotating blades) before being fed to the continuous mixer (205) (after possible storage). Preferably, in this case, the feeding to the continuous mixer (205) can be controlled by means of feeders (volumetric or weight loss feeders) (not shown in Figure 4).

Optionally, the liquid polymer (A) and/or the resin (B) and/or any oil (C) can be fed, in full or in part, (411) to the continuous mixing device (205) together with the first elastomeric composition (204). The continuous mixer (205) in Figure 4 only shows one feeding hopper (405). However, multiple feeding hoppers (not shown in Figure 4) may be present on the mixer (205).

The continuous mixing device (205) is provided with one or more suction units (208) to allow the suction of fluids and gases that may develop during the mixing of the elastomeric composition.

After the reworking (step P2) has been carried out, the elastomeric composition (209) is unloaded from the continuous mixing device (205), for example in the form of a continuous tape, by pumping it through a roller or calender nozzle (210), for example by means of a gear pump (not shown in Figure 4). Alternatively, the elastomeric (209) composition can be transformed in a divided product by pumping it through an extrusion nozzle (not shown in Figure 4) arranged at the head of the continuous mixer, said extrusion nozzle being provided with a perforated extrusion plate provided with knives, by means of a gear pump (not shown in Figure 4). The product obtained in divided form is subsequently cooled, preferably to room temperature, for example by conveying it towards a cooling device (not shown in Figure 4).

The elastomeric composition (209) may be fed (408) to a second discontinuous mixing device (401) (for example a Banbury® mixer) for a further mixing step. Preferably in this case, the second discontinuous mixer (401) is also fed with the vulcanising agent (F) and any optional components such as coupling agents (G), accelerants, retardants and various additives not fed during step (P1).

According to the particular embodiment in Figure 4, the elastomeric composition (209) is cooled, preferably to room temperature, by passing it through a cooling device (211) before being fed to said second discontinuous mixer (401).

Alternatively (not shown in Figure 4), the elastomeric composition (209) can be fed directly, without being cooled, to said second discontinuous mixer (401).

Alternatively (not shown in Figure 4), the elastomeric composition (209) can be obtained in the form of a divided product, as described above, and then be fed to said second discontinuous mixer (401).

The final elastomeric composition (412) is then unloaded from said second discontinuous mixer (401), preferably using a conveyor device, not shown, combined with the second mixer (401) as described above with reference to the conveyor (301). The final elastomeric composition (412) is typically unloaded from the conveyor in the form of a sheet, pumping it through an extrusion nozzle or a roller nozzle (not shown).

The resulting sheet is usually subjected to a cooling treatment, typically by using water and/or forced air. The sheet thus treated is then arranged on benches or coils awaiting further working.

Typically, the final elastomeric composition (412) is fed to a device for manufacturing a semi-finished product (not shown in Figure 4), such as a single screw short cylinder extruder with hot feeding, so as to obtain a tread band.

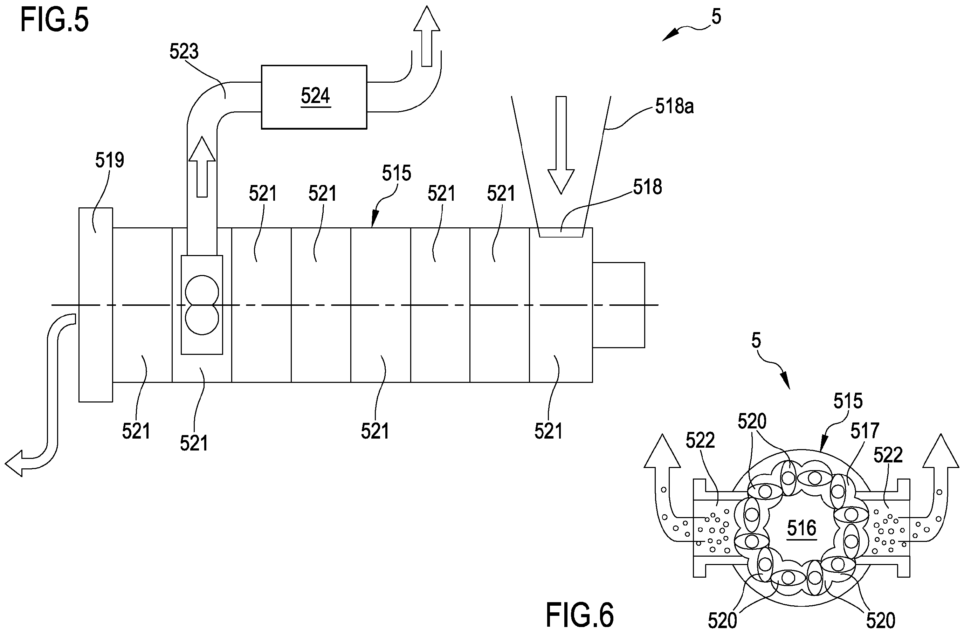

With reference to figures 5 and 6, the continuous mixer (5) comprises a substantially cylindrical containment body (515) which develops mainly along a longitudinal direction and carries a mandrel (516) within its own chamber. An inner annular chamber (517) is delimited between a radially outer surface of the mandrel (516) and a radially inner surface of the containment body (515) (Figure 6), which partially coincides with the chamber of the containment body (515). The mandrel (516) extends along a longitudinal axis "X-X" and is coaxially mounted fixed in the containment body (515).

The containment body (515) has at least one feeding opening (518) which opens radially in a lateral wall of the same, preferably with a hopper (518a), to allow the introduction into the annular chamber (517) of the first elastomeric composition produced before in step (P1), for example in a discontinuous mixer, and possibly, in full or in part, the liquid polymer (A) and/or the resin (B) and/or any oil (C).

The containment body (515) further has an outlet opening for the finished composition arranged at a distal end of the body (515) itself, for example at an extrusion head (519).

Mixing screws (520), preferably in number equal to or greater six (twelve in the embodiment shown), are arranged in the annular chamber (517), around the mandrel (516) and parallel to the longitudinal axis "X-X". The screws (520) are inter-penetrating and self-cleaning, are rotatably supported by the containment body (515) and extend substantially along the entire longitudinal extension of the annular chamber (517). The mixing screws (520) are moved in rotation by a motor, not shown, and have, along their longitudinal development, zones with different structural features for subjecting the composition to different process steps. The mixing screws (520) with their rotation advance the components of the composition in a predetermined transport direction and, at the same time, treat the same so as to produce the final elastomeric composition itself and impart the desired chemical-physical features thereto before it is unloaded through the outlet opening. For example, along said transport direction of the compound, the continuous mixer (5) has a material feeding zone, a chewing zone, a mixing zone and a transport zone towards said outlet opening. Regardless of the specific sequence of zones with different treatment, intense chewing zones, transport zones and mixed zones are provided. In intense chewing zones, the material is subjected to shear and axial stresses with production of heat due to the viscosity of the materials treated. In these zones, the filling of the annular chamber portion (517) is almost total and the treated materials lie substantially in contact with all the corresponding radially inner surface of the containment body (515) and with the corresponding radially outer surface of the mandrel (516). In the transport zones, the filling of the annular chamber (517) is of between about 20% and 50% and the materials are subject to lower stresses/deformations.

The containment body (515) has (figure 6), at the radially inner surface thereof, concavities which develop parallel to the longitudinal axis "X-X" and have a circular arc cross section. The mandrel (516) has (figure 6), at the radially outer surface thereof, corresponding concavities which develop parallel to the longitudinal axis "X-X" and have a circular arc cross section. The screws (520) are housed in such concavities.

The containment body (515) has (figure 5) a tubular shape and is formed by a plurality of annular segments (521) aligned along the longitudinal axis "X-X".

The annular segment (521) further downstream, with respect to the advancement direction of the compound, comprises hopper the 518a which ends in the feeding opening 518.

As shown in figures 5 and 6, the penultimate annular segment (521), counted starting from the feeding opening (518) towards the extrusion head (519), is provided with a pair of diametrically opposed conduits (522) that open into the inner annular chamber (517). Preferably, each of the conduits (522) is in fluid communication, via appropriate piping (523), with one or more vacuum pumps (524). The vacuum pump (524) preferably is a dry type and preferably has a nominal suction capacity of between about 100 $m^3$/h and about 450 $m^3$/h and an electric motor power demand of between about 2 kW and about 15 kW.

Preferably, at least one discontinuous mixer, such as a Banbury, may be provided upstream and/or downstream of the continuous mixer (5).

With reference to figures 5 and 6, in the reworking step (P2), the first elastomeric composition previously obtained in step P1 by one or more mixing processes carried out in a discontinuous mixer, such as one or more Banbury®, optionally together with, in full or in part, the liquid polymer (A) and/or the resin (B) and/or any oil (C) may be introduced through the feeding opening (518).

The composition is advanced by the mixing screws (520) towards the extrusion head (519) and at the same time intensely reworked so as to produce the final composition, thus imparting the desired chemical-physical features to the same, before it is unloaded through the outlet opening.

Before unloading the composition from the extrusion head (519), a suction from the inner chamber (517) towards the outside is preferably carried out under high vacuum, at the segment (521) provided with the conduits (522), so as to extract substances in the fluid state (gases, liquids, vapours) from the composition.

Preferably, the pump (524) is made to work to generate high vacuum, or a suction pressure Pa lower than 150 mbar, preferably lower than 100 mbar and even more preferably lower than 40 mbar. The substances extracted by the pump (524) are then subsequently conveyed to appropriate filtering devices, not shown.

The following examples are now provided for merely illustrative and non-limiting purposes of the present invention.

EXAMPLES

Where not indicated otherwise, in the present experimental part the components of the compositions are expressed in phr (parts per hundreds of rubber).

The following Table 1 summarizes the compositions of the plasticising mixtures, expressed in phr, used in the preparation of materials for treads of the comparative tests and according to the invention of Examples 1 to 10:

Table 1

| | Ex. 1 C | Ex. 2 A + C | Ex. 3 B + C | Ex. 4 C | Ex. 5 A + B + C | Ex. 6 A + C | Ex. 7 B + C | Ex. 8 A + B + C | Ex. 9 C | Ex. 10 A + B + C |
|---|---|---|---|---|---|---|---|---|---|---|
| | Comp | Comp | Comp | Comp | Comp | Comp | Comp | Inv | Comp | Inv |
| Liquid polymer (A) | -- | 25 | -- | -- | 25 | 25 | -- | 25 | -- | 10 |
| Resin (B) | -- | -- | 15 | -- | 15 | -- | 15 | 15 | -- | 7 |
| Total oil (C) | 55 | 30 | 40 | 55 | 15 | 30 | 40 | 15 | 45 | 45 |
| (A) + (B) + (C) | 55 | 55 | 55 | 55 | 55 | 55 | 55 | 55 | 45 | 45 |
| Process | P1 | P1 | P1 | P | P1 | P | P | P | P1 | P |

where Comp. are comparative compositions and Inv. are compositions according to the invention, P1 means a conventional mixing and dispersion process, comprising three subsequent mixing steps in discontinuous mixers and P means a process which, in addition to said conventional mixing and dispersion process (P1), comprises at least one reworking step (P2) carried out in a continuous mixer, preferably under high vacuum, according to the invention.

The compositions of Examples 1 to 8 are typical winter tread composition while those of Examples 9 and 10 are all season tread compositions.

The comparative composition of Example 1 is a standard winter tread composition, not comprising the liquid polymer A and the resin B, but only process oil C, obtained by a conventional process P1 (three subsequent mixing steps in a discontinuous mixer).

The comparative composition of Example 2 is a winter tread composition comprising a liquid polymer A and a process oil C, but not the resin B, obtained by a conventional process P1 (three subsequent mixing steps in a discontinuous mixer).

The comparative composition of Example 3 is for a winter tread composition comprising a resin B and process oil C, but not the liquid polymer A, obtained by a conventional process P1 (three mixing steps in a discontinuous mixer).

The comparative composition of Example 4 is a standard winter tread composition, not comprising the liquid polymer A and the resin B, but only process oil C, obtained by a process P1 (comprising a step P1 with three mixing steps in discontinuous mixers followed by a reworking step P2 in a continuous mixer).

The comparative composition of Example 5 is a winter tread composition comprising a liquid polymer A, a resin B and process oil C, obtained by a conventional process P1 (three mixing steps in a discontinuous mixer). This composition corresponds to the first elastomeric composition which is obtained at the end of the first mixing and dispersion step P1 as defined above and substantially follows the composition described in example III R and III S of the application EP2468815 cited above. The comparative composition of example 6 is a winter tread composition comprising a liquid polymer A and a process oil C, but not a resin B, obtained by a process P (comprising a step P1 with three mixing steps in discontinuous mixers followed by a reworking step P2 in a continuous mixer).

The comparative composition of example 7 is a winter tread composition comprising a resin B and process oil C, but not the liquid polymer A, obtained by a process P (comprising a step P1 with three mixing steps in discontinuous mixers followed by a reworking step P2 in a continuous mixer).

The composition according to the invention of Example 8 is a winter tread composition comprising a liquid polymer A, a resin B and a process oil C, obtained by process P (comprising a step P1 with three mixing steps in discontinuous mixers followed by a reworking step P2 in a continuous mixer).

The comparative composition of Example 9 is a standard all season tread composition, not comprising the liquid polymer A and the resin B, but only process oil C, obtained by a conventional process P1 (three mixing steps in a discontinuous mixer).

The composition according to the invention of Example 10 is an all season tread composition comprising a liquid polymer A, a resin B and a process oil C, obtained by process P (comprising a step P1 with three mixing steps in discontinuous mixers followed by a reworking step P2 in a continuous mixer).

Comparative compositions for winter treads (Examples 1-4)

The following Table 2 shows the complete recipes of comparative winter tread compositions (Examples 1-4) and the type of process used for their preparation:

Table 2

| | Ex. 1 C | Ex. 2 A + C | Ex. 3 B + C | Ex. 4 C |
|---|---|---|---|---|
| | Comp | Comp | Comp | Comp |
| Liquid polymer (A) | -- | 25 | -- | -- |
| Resin (B) | -- | -- | 15 | -- |
| Plasticiser (oil C) | 40 | 15 | 25 | 40 |
| SBR-mod (D) diluted with 37.5 phr oil TDAE (C) | 40 SBR 15 oil | 40 SBR 15 oil | 40 SBR 15 oil | 40 SBR 15 oil |
| BR (Nd) (D) | 32 | 32 | 32 | 32 |
| NR (D) | 28 | 28 | 28 | 28 |
| Carbon black (E) | 8 | 8 | 8 | 8 |
| Silica (E) | 95 | 95 | 95 | 95 |
| TESPT silane (G) | 6.7 | 6.7 | 6.7 | 6.7 |
| Zinc soap | 3 | 3 | 3 | 3 |
| Wax | 2 | 2 | 2 | 2 |
| Stearic ac. | 3 | 3 | 3 | 3 |
| Zinc oxide | 2.5 | 2.5 | 2.5 | 2.5 |
| 6-PPD | 3 | 3 | 3 | 3 |
| TMQ | 1.5 | 1.5 | 1.5 | 1.5 |

(continued)

| | Ex. 1 C | Ex. 2 A + C | Ex. 3 B + C | Ex. 4 C |
|---|---|---|---|---|
| | Comp | Comp | Comp | Comp |
| MBTS | 1.5 | 1.5 | 1.5 | 1.5 |
| CBS | 3 | 3 | 3 | 3 |
| Sulphur (F) | 1.5 | 1.5 | 1.5 | 1.5 |
| Total Phr | 285.7 | 285.7 | 285.7 | 285.7 |
| Total oil (C) | 55 | 30 | 40 | 55 |
| (A) + (B) + (C) | 55 | 55 | 55 | 55 |
| Process | P1 | P1 | P1 | P |

wherein Liquid polymer (A): Liquid polybutadiene Polyvest 130 (Evonik);

Resin (B): Terpene/styrene copolymer Dercolyte TS105 (DRT);

Oil (C): TDAE Treated Distillate Aromatic Extract Vivatec 500 (H&R);

SBR (D): Styrene/Butadiene copolymer SLR 4630 (Trinseo) (diluted with 37.5 phr oil every 100 phr dry elastomeric polymer);

BR (Nd) (D): polybutadiene (Europrene Neocis® BR40) - Polimeri Europa;

NR (D): natural rubber SIR 20;

Carbon black (E): N234 (Birla Group);

Silica (E): Ultrasil 7000 (Evonik);

Silane TESPT: bis(3-triethoxysilylpropyl)tetrasulphide - Si69 (Evonik);

Zinc soap: hydrocarbon mixture, zinc soaps and fillers (Aktiplast ST Rheinchemie);

Wax: Mixture of N-paraffins (Repsol) (Ozone protection) Stearic acid: (Undesa) (Activator) Zinc oxide: (Rhein Chemie) (Activator) 6-PPD: phenyl-p-phenylenediamine (6-PPD-Akzo Nobel) (Antiozonant);

TMQ: 2,2,4-Trimethyl-1,2-dihydroquinoline (Lanxess) (Antioxidant);

MBTS: 2.2' Dibenzothiacyl disulphide (Lanxess) (Accelerant);

CBS: N-cyclohexyl-2-benzothiazyl-sulfenamide Vulkacit® CZ/C - (Lanxess) (Accelerant);

Sulphur: (Zolfoindustria) (vulcanising agent) P1: conventional mixing process (three mixing steps in a discontinuous mixer) as described below.

P: mixing process comprising a conventional step P1, with three mixing steps in succession in a discontinuous mixer, followed by a reworking step P2 in a continuous mixer, as described below.

The comparative composition of Example 1 is a typical tread composition of a line of winter tyres and comprises an NR/BR/SBR mixture. The composition, loaded with silica (E), contains a bifunctional silane (TESPT) (G) for the coupling of the filler with the polymers in the mixture. Moreover, the composition includes a significant amount of plasticising oil derived from petroleum (C), in part contained as extender of the solid elastomeric polymer (D) (SBR) and in part added to the composition as a separate ingredient (TDAE) to impart the necessary plasticity of the material.

In the reference composition of Example 2, a part of the plasticising oil (C) was replaced by an equal amount of liquid polymer (A).

In the reference composition of Example 3, a part (10 phr) of the plasticising oil (C) was replaced by an equal amount of resin (B).

The composition of Example 4 comprises the same ingredients as the composition of Example 1 but differs in the preparation process, which in addition to the conventional process P1, comprises a reworking step in a continuous mixer (P2), as described below.

Comparative winter tread compositions (Examples 5 - 7) and according to the invention (Example 8)

Comparative winter tread compositions (Examples 5 to 7) and according to the invention (Example 8) were prepared with the components and according to the processes shown in the following Table 3:

Table 3

| | Ex. 5 A + B + C | Ex. 6 A + C | Ex. 7 B + C | Ex. 8 A + B + C |
|---|---|---|---|---|
| | Comp | Comp | Comp | Inv |
| Liquid polymer (A) | 25 | 25 | -- | 25 |
| Resin (B) | 15 | -- | 15 | 15 |
| Plasticiser (oil C) | -- | 15 | 25 | -- |
| SBR-mod (D) diluted in oil 37.5 phr TDAE (C) | 40 SBR 15 oil | 40 SBR 15 oil | 40 SBR 15 oil | 40 SBR 15 oil |
| BR (Nd) (D) | 32 | 32 | 32 | 32 |
| NR (D) | 28 | 28 | 28 | 28 |
| Carbon black (E) | 8 | 8 | 8 | 8 |
| Silica (E) | 95 | 95 | 95 | 95 |
| TESPT silane (G) | 6.7 | 6.7 | 6.7 | 6.7 |
| Zinc soap | 3 | 3 | 3 | 3 |
| Wax | 2 | 2 | 2 | 2 |
| Stearic ac. | 3 | 3 | 3 | 3 |
| Zinc oxide | 2.5 | 2.5 | 2.5 | 2.5 |
| 6-PPD | 3 | 3 | 3 | 3 |
| TMQ | 1.5 | 1.5 | 1.5 | 1.5 |
| MBTS | 1.5 | 1.5 | 1.5 | 1.5 |
| CBS | 3 | 3 | 3 | 3 |
| Sulphur (F) | 1.5 | 1.5 | 1.5 | 1.5 |
| Total Phr | 285.7 | 285.7 | 285.7 | 285.7 |
| Total oil (C) | 15 | 30 | 40 | 15 |
| (A) + (B) + (C) | 55 | 55 | 55 | 55 |
| Process | P1 | P | P | P |

wherein the definitions of the materials and processes correspond to those provided at the bottom of Table 2.

Comparative all season tread compositions (Example 9) and according to the invention (Example 10)

Comparative all season tread compositions (Example 9) and according to the invention (Example 10) were prepared with the components and according to the processes shown in the following Table 4:

Table 4

| | Ex. 9 C | Ex. 10 A + B + C |
|---|---|---|
| | Comp | Inv |
| Liquid polymer (A) | -- | 10 |
| Resin (B) | -- | 7 |
| Plasticiser oil (C) | 17 | -- |
| SBR-mod. (D) diluted in oil 37.5 phr TDAE (C) | 74.5 SBR 28 oil | 74.5 SBR 28 oil |
| BR (Nd) (D) | 25.5 | 25.5 |
| Carbon black (E) | 9 | 9 |

(continued)

|  | Ex. 9 C | Ex. 10 A + B + C |
|---|---|---|
| Silica (E) | 95 | 95 |
| TESPT silane (G) | 7.6 | 7.6 |
| Wax | 2.5 | 2.5 |
| Stearic ac. | 2.5 | 2.5 |
| Zinc oxide | 2.5 | 2.5 |
| 6-PPD | 2.5 | 2.5 |
| TMQ | 1.5 | 1.5 |
| MBTS | 1.1 | 1.1 |
| CBS | 2.1 | 2.1 |
| Sulphur (F) | 1.6 | 1.6 |
| Total Phr | 272.9 | 272.9 |
| Total oil (C) | 45 | 28 |
| (A) + (B) + (C) | 45 | 45 |
| Process | P1 | P |
| wherein<br>Silica (E): Zeosil Z1165 (Solvay) and the other materials and processes correspond to those defined at the bottom of Table 2. | | |

Preparation of compositions for treads according to process P1

The comparative elastomeric compositions of Examples 1, 2, 3, 5 and 9 were prepared according to a conventional mixing and dispersion process P1 comprising three subsequent mixing sub-steps in a discontinuous mixer (Banbury®), as described herein:

First sub-step

The liquid polymer (A), the resin (B), the plasticiser (oil C), the elastomers (D), the carbon black and silica fillers (E), the Silane TESPT (G), the zinc soap and the stearic acid - if any - were fed and mixed in a batch mixer Banbury® (Pomini 11-D model), which operated under the following conditions:

    capacity: 200 l
    feeding: 180-190 kg;
    unloading temperature: 140-150 °C;
    mixing time: 5 minutes;
    rotor speed: 40 rpm;
    Pressure: ambient

Second sub-step

The elastomeric composition obtained in the first step, the wax, zinc oxide, the 6-PPD and TMQ were subsequently fed to the same Banbury® described above with reference to sub-step 1 and subjected to a further mixing step under the following conditions:

    feeding: 180-190 kg;
    unloading temperature: 100 °C;
    mixing time: 2-2.5 minutes;
    rotor speed: 25-30 rpm;
    Pressure: ambient

Third sub-step

The elastomeric composition obtained at the end of the second sub-step and sulphur, CBS and MBTS were subsequently fed to the same Banbury® described above with reference to the first two sub-steps and subjected to a final mixing step under the following conditions:

feeding: 180-190 kg;
unloading temperature: 100 °C;
mixing time: 2-2.5 minutes;
rotor speed: 25-30 rpm;
Pressure: ambient.

The first elastomeric composition produced at the end of the third mixing step in a discontinuous mixer was then unloaded and cooled in air to a temperature of about 25 °C.

Preparation of compositions for treads according to process P: step P1 +step P2

The elastomeric compositions of Examples 4, 6, 7 (comparative), 8 and 10 (invention) were prepared according to a process P which comprises the conventional mixing and dispersion process P1 described above - with three subsequent mixing steps in discontinuous mixers - followed by a reworking step P2 in a continuous mixer, under high vacuum.

In particular, the elastomeric composition produced at the end of step P1 described above (first elastomeric composition) was fed to a continuous co-rotating twin-screw mixer having a cylinder diameter of 40 mm and an L/D ratio of 48 (model Maris TM40HT) and subjected to a further reworking step under the following conditions:

feeding: 70 kg/h;
composition temperature in output from the mixer: 133°C;
screw speed: 220 rpm;
filling degree: 77%
specific energy: 0.22 kWh/kg
suction pressure: 40 mbar

The elastomeric composition was continuously unloaded and cooled by a bath in water, fed directly to an extruder and unloaded in the form of a sheet.

Evaluation of the properties of the elastomeric compositions of Examples 1-10

Properties of non-vulcanised compositions

The vulcanisable (green) elastomeric compositions of Examples 1-10 were subjected to the following evaluations:

Mooney viscosity ML (1 + 4) at 100 °C was measured according to the ISO 289-1:2005 standard.
Scorching time was measured at 127 °C according to the ISO 289-2:1994 standard.
Rheometric analysis MDR (according to ISO 6502) using an Alpha Technologies rheometer type MDR2000, the tests were carried out at 170 °C for 20 minutes at an oscillation frequency of 1.66 Hz (100 oscillations per minute) and an oscillation amplitude of $\pm$ 0.5°, measuring the time necessary to achieve an increase of two rheometric units (TS2) and the time necessary to achieve 30% (T30) and 90% (T90), respectively, of the final torque value (Mf). The maximum torque value MH and the minimum torque value ML were also measured.

Properties of vulcanised compositions

The vulcanised elastomeric compositions of Examples 1-10 were subjected to the following evaluations after vulcanisation:
The static mechanical properties were measured at 23 °C according to the ISO 37:2005 standard. In particular, the load at different levels of elongation (50%, 100% and 300%, named in succession CA05 - CA1 - CA3), the load at break CR and elongation at break AR were measured on samples of the elastomeric compositions mentioned above, vulcanised at 170 °C for 10 minutes.

The tensile tests were carried out on straight axis Dumbell specimens.

The hardness in IRHD degrees (23 °C) was measured according to the ISO 48:2007 standard on samples of the elastomeric materials mentioned above, vulcanised at 170 °C for 10 minutes.

The Shore A hardness was evaluated according to ASTM D2240 at 23 °C.

The dynamic mechanical properties were measured using an Instron dynamic device in traction-compression mode according to the following methods. A sample of the green elastomeric compositions of Examples 1 - 10 vulcanised at 170 °C for 10 minutes having a cylindrical shape (length = 25 mm; diameter = 14 mm), pre-load compression up to 25% of the longitudinal deformation with respect to the initial length and maintained at the predetermined temperature (equal to -10 °C, 0 °C, 23 °C or 70 °C) for the whole duration of the test, was subjected to a dynamic sinusoidal strain having an amplitude of $\pm 3.5\%$ with respect to the length under pre-load, with a frequency of 10 Hz.

The dynamic mechanical properties are expressed in terms of dynamic elastic modulus (E') and Tan delta (dissipation factor). The Tan delta value was calculated as a ratio of the viscous modulus (E") to the elastic modulus (E').

The following Table 5 shows the results of the analyses described above for the samples of the comparative compositions according to Examples 1-4. The measurement values were remeasured considering 100 the values obtained with the composition of Example 1 taken as a reference.

Table 5

| Parameter/Test | Unit of measurement | Ex. 1 C | Ex. 2 A + C | Ex. 3 B + C | Ex. 4 C (+P) |
|---|---|---|---|---|---|
| | | Comp | Comp | Comp | Comp |
| CA0.5 | MPa | 100 | 88 | 109 | 94 |
| CA1 | MPa | 100 | 93 | 110 | 93 |
| CA3 | MPa | 100 | 99 | 109 | 92 |
| CR | MPa | 100 | 98 | 102 | 101 |
| AR | % | 100 | 100 | 96 | 105 |
| IRHD | IRHD | 100 | 92 | 102 | 98 |
| Shore A hardness | Shore A | 100 | 93 | 102 | 99 |
| Mooney ML(1 + 4) at 100 °C | MU | 100 | 83 | 98 | 94 |
| E' 10 Hz -10 °C | MPa | 100 | 85 | 104 | 100 |
| Tan d 10 Hz-10 °C | | 100 | 91 | 103 | 106 |
| E' 10 Hz 0°C | MPa | 100 | 84 | 104 | 100 |
| Tan d 10 Hz 0°C | | 100 | 93 | 100 | 108 |
| E' 10 Hz 23°C | MPa | 100 | 87 | 109 | 99 |
| Tan d 10 Hz 23°C | | 100 | 97 | 96 | 108 |
| E' 10 Hz 70°C | MPa | 100 | 90 | 105 | 98 |
| Tan d 10 Hz 70°C | | 100 | 100 | 92 | 103 |
| ML | dNm | 100 | 84 | 102 | 94 |
| MH | dNm | 100 | 87 | 104 | 97 |
| TS1 | min | 100 | 131 | 74 | 82 |
| TS2 | min | 100 | 178 | 92 | 77 |
| T30 | min | 100 | 143 | 104 | 97 |
| T60 | min | 100 | 126 | 101 | 102 |
| T90 | min | 100 | 110 | 99 | 100 |
| Scorching time MS t5 | min | 100 | 213 | 105 | 115 |

The following Table 6 shows the results of the analyses described above for the samples of the comparative compositions of Examples 5-7 and according to the invention 8. The measurement values were remeasured considering 100 the values obtained with the composition of Example 1 taken as a reference.

Table 6

| Parameter | Unit of measurement | Ex. 1 C | Ex. 5 A + B + C | Ex. 6 A + C + P | Ex. 7 B + C + P | Ex. 8 A+ B+C+P |
|---|---|---|---|---|---|---|
| | | Comp | Comp | Comp | Comp | Inv |
| CA0.5 | MPa | 100 | 91 | 89 | 86 | 90 |
| CA1 | MPa | 100 | 90 | 87 | 85 | 88 |
| CA3 | MPa | 100 | 90 | 83 | 88 | 86 |
| CR | MPa | 100 | 100 | 99 | 105 | 99 |
| AR | % | 100 | 106 | 110 | 111 | 106 |
| IRHD | IRHD | 100 | 93 | 96 | 90 | 94 |
| Shore A hardness | Shore A | 100 | 93 | 95 | 92 | 95 |
| Mooney ML(1+4) 100 °C | MU | 100 | 95 | 87 | 87 | 83 |
| E' -10 °C | MPa | 100 | 96 | 98 | 92 | 97 |
| Tan d -10 °C | | 100 | 96 | 96 | 103 | 101 |
| E' 10 0 °C | MPa | 100 | 96 | 98 | 89 | 95 |
| Tan d 0°C | | 100 | 97 | 100 | 104 | 104 |
| E' 23°C | MPa | 100 | 98 | 98 | 92 | 95 |
| Tan d 23°C | | 100 | 105 | 109 | 108 | 116 |
| E' 70°C | MPa | 100 | 94 | 96 | 87 | 93 |
| Tan d 70°C | | 100 | 107 | 110 | 108 | 121 |
| ML | dNm | 100 | 89 | 88 | 85 | 80 |
| MH | dNm | 100 | 85 | 90 | 86 | 85 |
| TS1 | min | 100 | 134 | 80 | 102 | 76 |
| TS2 | min | 100 | 124 | 84 | 152 | 74 |
| T30 | min | 100 | 107 | 102 | 131 | 104 |
| T60 | min | 100 | 108 | 106 | 118 | 109 |
| T90 | min | 100 | 122 | 102 | 114 | 105 |
| MS t5 | min | 100 | 124 | 127 | 188 | 156 |
| Legend: E' and tan d measured at 10 Hz; Mooney: ML (1 + 4); MS t5: Scorching time | | | | | | |

The following Table 7 shows the results of the analyses described above for the samples of the comparative composition for all season tread of Example 9 and according to the invention of Example 10. The measurement values were remeasured considering 100 the values obtained with the composition of Example 9 taken as a reference.

Table 7

| Parameter | Unit of measure ment | Ex. 9 C | Ex. 10 A + B + C + P |
|---|---|---|---|
| | | Comp | Inv |
| CA0.5 | MPa | 100 | 91 |
| CA1 | MPa | 100 | 90 |
| CA3 | MPa | 100 | 95 |

(continued)

| Parameter | Unit of measure ment | Ex. 9 C | Ex. 10 A + B + C + P |
|---|---|---|---|
| | | Comp | Inv |
| CR | MPa | 100 | 114 |
| AR | % | 100 | 111 |
| IRHD | IRHD | 100 | 95 |
| Shore A hardness | Shore A | 100 | 97 |
| Mooney ML (1 + 4) 100 °C | MU | 100 | 95 |
| E' -10 °C | MPa | 100 | 91 |
| Tan d -10 °C | | 100 | 105 |
| E' 0°C | MPa | 100 | 91 |
| Tan d 0°C | | 100 | 105 |
| E' 23°C | MPa | 100 | 89 |
| Tan d 23°C | | 100 | 104 |
| E' 70°C | MPa | 100 | 89 |
| Tan d 70°C | | 100 | 109 |
| ML | dNm | 100 | 89 |
| MH | dNm | 100 | 91 |
| TS1 | min | 100 | 100 |
| TS2 | min | 100 | 96 |
| T30 | min | 100 | 103 |
| T60 | min | 100 | 103 |
| T90 | min | 100 | 107 |

Driving tests

Tyres for passenger cars were produced with tread band prepared by vulcanisation of the comparative elastomeric compositions of Examples 1-7 and 9 and of the compositions according to the invention of Examples 8 and 10, and subjected to driving tests.

All tyres measured 225/45 R17 with 6.0J rim and inflation pressure of 2.2 bar for the front tyres and 2 bar for the rear.

The tests were carried out by equipping a Volkswagen Golf car for tests on snow and a Fiat Punto for the other tests.

Braking tests on dry and wet roads, behaviour tests driving on dry and wet roads and driving and braking tests on snow-covered road were conducted.

The braking test, in both dry and wet conditions, is carried out with tyres fitted to a vehicle equipped with wheel anti-blocking system (A.B.S.).

This braking test was carried out on a straight asphalt section both in dry and wet conditions, measuring the stopping distance from a predetermined initial speed, typically 100 km/h in dry conditions and 80 km/h in wet conditions.

The behaviour test in driving in wet and dry road conditions, is carried out on predetermined paths, typically circuits closed to traffic. By simulating some typical manoeuvres (such as changing lanes, overtaking, slalom between skittles, entering and exiting corners) performed at a constant speed, and in acceleration and deceleration, the tyre performance is evaluated by the test driver giving a numerical evaluation of the behaviour of the latter during the above manoeuvres.

The braking test on snow-covered road was carried out subjecting the vehicle to deceleration from 50 to 5 km/h using both the wheel anti-blocking system (A.B.S.) and the drive with blocked wheels.

The driving test on snow-covered road was carried out by subjecting the vehicle to acceleration from 0 to 35/40 km/h, where the tensile force exerted by the tyre on the road surface covered with snow is detected by means of accelerometers.

The results of the driving tests are shown in Tables 8, 9, 10 and 11, where the values of ratings were remeasured by setting the values of the reference winter tyre (tread composition of Example 1) or of the reference all season tyre (tread composition of Example 9) equal to 100:

Table 8

| Driving tests | Ex. 1 C | Ex. 2 A + C | Ex. 3 B + C | Ex. 4 C + P |
|---|---|---|---|---|
| | Comp | Comp | Comp | Comp |
| Driving and braking on snow | 100 | 103 | 97 | 100 |
| Behaviour on wet | 100 | 99 | 105 | 102 |
| Behaviour on dry | 100 | 92 | 105 | 105 |
| Braking on wet | 100 | 97 | 105 | 100 |
| Braking on dry | 100 | 100 | 101 | 100 |

In tables 8, 9, 10 and 11 relating to the driving test results, an increase in the value with respect to 100 indicates an improvement with regard to that parameter (e.g. 103 vs. 100 in the driving and braking on snow means that the tyre behaves better - that is, shows a superior driving and a shorter braking distance on snow - compared to the tyre with a tread according to the reference Example 1). Likewise, a reduction of the value (e.g. from 100 to 92 in the behaviour on dry, from the composition of Example 1 to that of Example 2) represents a worsened performance.

Example 2 shows the effect of replacing part of the plasticiser C (TDAE oil derived from petroleum) with a liquid polymer A (Polyvest130), a polymer characterised by a lower Tg (Tg about -99 °C) compared to the TDAE oil (Tg -50 °C) and a higher molecular weight (about 4600 Da).

The material of Example 2 therefore has a lower Tg than that of the material of Example 1 and consequently a higher flexibility at low temperatures, as confirmed by the lower value of E' measured at-10 °C (dynamic rigidity lower by about 15%) (Table 5). The greater flexibility of the material results in an improvement of the driving performance on snow, in line with the results of the driving tests shown in Table 8 above (driving and braking on snow, Ex. 1 100 vs Ex. 2 103). At the same time, however, the hysteresis at 0 °C and -10 °C - considered predictive of the behaviour and braking on wet - is decreased (see tan delta at 0 °C and -10 °C in Table 5) as is the dynamic rigidity at 70 °C (E'), a magnitude related to the performance on dry. A reduction of the dynamic module E' at 70 °C corresponds to a sharp worsening of behaviour on dry surfaces, especially in the case of winter tyre with a quite mobile tread pattern.

In conclusion, the introduction of the liquid polymer A alone in the composition does not solve the conflict of performance on the snow compared to those on dry and wet. In fact, it can be seen in table 5 that while the driving performance is significantly improved on the snow, they are worsened in the behaviour and/or braking on dry and wet surface.

In the composition of Example 3, the partial replacement of the plasticising oil (C) with a plant-based resin (B) (natural terpene copolymerised with styrene, Dercolyte TS105) leads to a material with modulus of elasticity E' higher than -10 °C and with higher hysteresis at -10 °C and a hysteresis substantially unchanged at 0 °C compared to the reference of Example 1.

This resin has a higher Tg than that of TDAE (+ 55 °C vs -50 °C) and thus, the Tg of the material of Example 3 is shifted to higher temperatures.

Accordingly, the flexibility of the material at low temperatures is lower, as confirmed by the higher dynamic rigidity at both -10 °C and at 0 °C of the sample of Example 3 compared to the reference of Example 1 (E' at -10 °C +4%). The increase in rigidity is also present at 70 °C (E' +5%). These variations in the material properties are reflected in the performance of the tyres which are worsened on snow and improved on wet and dry, both in terms of behaviour and braking (Table 8).

Example 4 of Table 8 shows the effect that the specific preparation process P as defined above, in particular the continuous reworking step P2, preferably under high vacuum, has on the material properties.

It is noted that the behaviour on wet and dry is improved without substantially changing other performances, in particular without improving the performance on snow. Table 5 shows an increase of hysteresis at 0 °C (tan delta 0 °C +8%) while the low-temperature flexibility (E' at -10 °C) remains unchanged. Although the material of Example 4 has a slightly lower (-2%) dynamic rigidity at 70 °C, the tyre is more performing on dry.

The following Table 9 shows the results of the driving tests conducted with winter tyres comprising the comparative compositions of Examples 5 to 7 and of the invention according to Example 8, remeasured by setting the values obtained with the material of the reference Example 1 equal to 100:

Table 9

| Driving tests | Ex. 1 C | Ex. 5 A + B + C | Ex. 6 A + C + P | Ex. 7 B + C + P | Ex. 8 A + B + C + P |
|---|---|---|---|---|---|
| | Comp | Comp | Comp | Comp | Inv |
| Driving and braking on snow | 100 | 102 | 102 | 100 | 103 |
| Behaviour on wet | 100 | 98 | 92 | 100 | 110 |
| Behaviour on dry | 100 | 105 | 105 | 102 | 113 |
| Braking on wet | 100 | 99 | 96 | 103 | 102 |
| Braking on dry | 100 | 101 | 97 | 100 | 100 |

The performance of the compositions of the reference Examples 5, 6 and 7 - compositions in which partial combinations of relevant features A (liquid polymer), B (resin), C (oil) and P (process comprising a continuous reworking step P2, preferably under vacuum) are present - support the unpredictability of the improved performance of the composition according to the invention of Example 8 - in which all the features A, B, C and P are combined.

The composition of Example 5 shows that by replacing part of the plasticising oil (C) with a combination of liquid polymer (A) and resin (B), keeping the same dispersion and mixing process (P1), it is possible to achieve better performances of dry behaviour and grip on snow than the reference composition of Example 1 without a significant worsening of performance on wet.

In the composition of Example 6, the combination of liquid polymer (A) and mixing process (P) basically determines the same performance already observed for the sample of Example 5. In fact, an improved performance is observed on snow and in the behaviour on dry but a more marked worsening of behaviour on wet.

Finally, the effect of the resin (B) and mixing process (P) combination was tested with the composition of Example 7. As can be seen from the results of the driving tests, this composition shows a good level of balanced performance without however reaching the goal of simultaneously improving the wet and dry behaviour and performance on snow.

On the contrary, the composition according to the invention of Example 8 shows that by combining the features (A), (B), (C) and (D), the performance in the driving tests on snow and behaviour on wet and dry all improve simultaneously and without affecting other parameters.

The tyres comprising the compositions of the invention behave well on snow: flexibility at low temperatures (table 6) is lower than that of the reference composition of Example 1 (E' at 0 °C -5%, E' at -10 °C -3%) and much better than reference tyres in the behaviour on wet and dry roads. By comparing this performance with that measured for the comparative sample of Example 5, prepared according to a conventional mixing process, it is possible to appreciate the unexpected contribution of the continuous reworking step P2, preferably under high vacuum, on the properties of materials, in particular on the performance on dry and wet.

Such an evident improvement of the latter performance is unpredictable in the light of the values measured for the properties deemed as predictive, i.e. hysteresis at 0 °C (Tan delta 0 °C) for behaviour on wet, and even more the dynamic rigidity at high temperature (E' at 70 °C), for the behaviour on dry, values that do not predict such an increase.

Generally, in fact, the dynamic rigidity E' in compositions for winter tyres should be kept at 70 °C in order to improve the behaviour on dry.

Instead for the composition of the invention, the value of E' at 70 °C decreased (-7%) compared to that of the reference composition of Example 1 against a definitely improved behaviour on dry (113 vs 100) (Table 6).

As regards the behaviour on wet, the excellent performance (at least +10% with respect to all the reference examples) could not be predicted on the basis of the results obtained with the compositions characterised by a pair of parameters (AC or BC or CP of Examples 2-4) or by the combination of three of these (ABC, ACP and BCP of Examples 5-7).

Calculation of the performance for the composition of Example 8

To further support the unpredictability of the results obtained with the compositions of the invention, the theoretical values of performance on snow, of behaviour and braking on wet and dry roads were calculated for the composition of Example 8 according to an additive model, i.e. by adding the mean value of the contribution of features A, B, and P, a contribution obtained by the comparison of the values measured for the compositions of Ex. 2 (contribution of A), Ex. 3 (contribution of B) and Ex. 4 (contribution of P) with respect to the corresponding values measured for the reference composition of Example 1 (Table 8).

The contributions of the single elements A, B and P (in brackets), the mean theoretical values calculated with them and the actual values of the properties of tyres comprising the composition of Example 8 measured in the driving tests are shown in the following Table 10:

Table 10

| Driving tests | Ex. 1 C | Ex. 2 A + C | Ex. 3 B + C | Ex. 4 C + P | Ex. 8 A + B + C + P | Ex. 8 A + B + C + P |
|---|---|---|---|---|---|---|
| | Comp | Comp | Comp | Comp | INV | INV |
| | | | | | Calculated values | Measured values |
| Driving and braking on snow | 100 | 103 (+3) | 97 (-3) | 100 (0) | 100 (0)* | 103 |
| Behaviour on wet | 100 | 99 (-1) | 105 (+5) | 102 (+2) | 102 (+2)* | 110 |
| Behaviour on dry | 100 | 92 (-8) | 105 (+5) | 105 (+5) | 100.7 (+0.7)* | 113 |
| Braking on wet | 100 | 97 (-3) | 105 ( + 5) | 100 (0) | 100.7 (+0.7)* | 102 |
| Braking on dry | 100 | 100 (0) | 101 (+1) | 100 (0) | 100.3 (0.3)* | 100 |
| *mean value calculated | | | | | | |

Table 10 shows that the measured values for the composition of Example 8 of driving and braking on snow, behaviour on wet and dry and wet braking are higher than those expected (calculated), demonstrating an unexpected synergy between the components (A), (B), (C) and the specific mixing process (P). Moreover, it is seen that the calculated performance (expected performance) would correspond to tyres slightly improved in terms of behaviour on dry and wet and wet braking, but not as satisfactory for the performance on snow.

The following Table 11 shows the results of the driving tests conducted with tyres comprising the comparative all season compositions of Example 9 (comparative) and of Example 10 (invention), remeasured by setting the values obtained with the material of the reference Example 9 equal to 100:

Table 11

| | Ex 9 C | Ex 10 A + B + C + P |
|---|---|---|
| Driving and braking on snow | 100 | 104 |
| Behaviour on snow | 100 | 109 |
| Behaviour on wet | 100 | 100 |
| Behaviour on dry | 100 | 100 |

As for the winter tread composition according to the invention (example 8 composition), also in the case of all season tread composition (Example 10) it has been proved that it is possible to unexpectedly improve the performance on snow and maintain that on wet and dry high by combining elements A (liquid polymer), B (resin), C (plasticising oil) and P (mixing process).

The driving test results show that it was possible to improve the behaviour on snow of tyres with tread according to the invention (Ex. 10) while preserving the behaviour performance level on dry and wet. These performances are usually in conflict especially in all season UHP-type tyres, and the results obtained herein are very satisfactory, completely unexpected and unpredictable on the basis of the properties of materials.

In fact, it was particularly surprising to be able to achieve the excellent level of behaviour on dry, although the dynamic rigidity of the material at higher temperatures (E' at 70 °C, 10 Hz, Instron) was reduced by 5% (Table 7).

**Claims**

1. Elastomeric composition for tyres for vehicles comprising at least
   one quantity X equal to at least 1 phr of at least one liquid polymer (A),
   one quantity Y equal to at least 1 phr of at least one resin (B),
   100 phr of at least one solid diene elastomeric polymer (D),
   at least 30 phr of at least one reinforcing filler (E);
   wherein said composition is obtainable according to a process (P) which comprises at least one mixing and dispersion step (P1) to give a first elastomeric composition followed by at least one reworking step (P2),
   wherein the mixing and dispersion step (P1) comprises

   - feeding at least one mixing apparatus, comprising at least one discontinuous mixer and/or at least one continuous mixer, at least:

       one quantity X1 of the liquid polymer (A), wherein $0 \leq X1 \leq X$,
       one quantity Y1 of the resin (B), wherein $0 \leq Y1 \leq Y$,
       the solid diene elastomeric polymer (D),
       the reinforcing filler (E);

   - mixing and dispersing said components, to give said first elastomeric composition;
   - possibly unloading said first elastomeric composition from said mixing apparatus;
   and wherein the reworking step (P2) comprises
   - feeding, to at least one continuous mixer, said first elastomeric composition and, possibly,

       one quantity X2 of the liquid polymer (A), wherein $0 \leq X2 \leq X$,
       one quantity Y2 of the resin (B), wherein $0 \leq Y2 \leq Y$,

   wherein $X1 + X2 = X$ and $Y1 + Y2 = Y$,
   - mixing said first elastomeric composition and dispersing therein the liquid polymer (A) and/or the resin (B) possibly fed in step (P2), by means of said at least one continuous mixer, preferably by applying, to said continuous mixer, a suction pressure (Pa) less than about 150 mbar in a manner so as to obtain said elastomeric composition; and
   - unloading said elastomeric composition from said at least one continuous mixer.

2. The composition as claimed in claim 1, wherein the total quantity (Y) of resin B is less than 30 phr.

3. The composition as claimed in claim 1 or 2, comprising at least:

   - one quantity X of at least one liquid polymer (A) comprised between 3 and 70 phr, 5 and 60 phr or between 5 and 50 phr or between 5 and 40 phr or between 5 and 30 phr; and/or
   - one quantity Y of at least one resin (B) comprised between 3 and 30 phr or between 3 and 25 phr or between 5 and 30 phr or between 5 and 25 phr or between 5 and 20 phr or between 5 and 15 phr; and/or
   - possibly, one quantity Z of at least one plasticising oil (C) comprised between 0 and 70 phr or between 0 and 60 phr or between 0 and 50 phr or between 5 and 70 phr or between 10 and 60 phr or between 15 and 50 phr, and/or
   - from 30 to 120 phr or from 50 to 120 phr or from 70 to 110 phr or from 80 to 100 phr of at least one reinforcing filler (E).

4. The composition as claimed in one of claims 1 to 3, wherein:

   - said liquid polymer (A) is **characterised by** a weight-average molecular weight ($\overline{M}w$) not greater than 80000 g/mol, and/or by a glass transition temperature (Tg) less than 0°C, preferably by a weight-average molecular weight ($\overline{M}w$) comprised between 500 and 80000 g/mol, more preferably between 500 and 60000 g/mol and/or by a glass transition temperature (Tg) comprised between -105 and 0°C, more preferably between -100°C and -50°C;
   - said resin (B) is **characterised by** a weight-average molecular weight ($\overline{M}w$) comprised between 200 and 3000 g/mol, preferably between 500 and 2000 g/mol and/or by a glass transition temperature (Tg) greater than 0°C, preferably greater than 25°C and/or by a softening temperature (Tm) greater than 25°C, preferably comprised between 50 and 160°C or between 80°C and 140°C or, for a liquid resin (B), less than 25°C, preferably less than 0°C, less than -10°C, or less than -25°C.

5. The composition as claimed in any one of the preceding claims wherein the at least one liquid polymer (A) is selected from among:

- the liquid polymers (A) butadiene based (BR) **characterised by** a ($\overline{M}w$) comprised between 500 and 30000 g/mol, preferably between 3000 and 10000 g/mol and/or a glass transition temperature (Tg) between -100°C and 0°C, preferably between -95°C and -50°C; and/or
- the liquid polymers (A) isoprene based (IR) **characterised by** a ($\overline{M}w$) comprised between 3000 and 80000 g/mol, preferably between 10000 and 60000 g/mol and/or a glass transition temperature (Tg) comprised between -70°C and -30°C; and/or
- the liquid polymers styrene / butadiene based (SBR) **characterised by** a ($\overline{M}w$) comprised between 1000 and 60000 g/mol, more preferably between 3000 and 50000 g/mol and/or by a styrene content comprised between 5 and 50% by weight, preferably between 5 and 30% by weight and/or a Tg less than 0°C, more preferably comprised between -70 and 0°C, and/or
- the depolymerised natural liquid polymers (NR) **characterised by** a ($\overline{M}w$) less than 60000 g/mol, preferably less than 40000 g/mol.

6. The composition as claimed in any one of the preceding claims wherein the at least one resin (B) is selected from among:

- the hydrocarbon resins, preferably from among the hydrocarbon resins derived from coumarone-indene, styrene-indene, styrene-alkylstyrene, and the aliphatic hydrocarbon resins, preferably having a weight-average molecular weight comprised between 500 and 3000 g/mol, more preferably between 700 and 1500 g/mol; and/or
- the phenolic resins, preferably from among the resins alkylphenol-formaldehyde based, alkylphenolic resins modified with rosin, resins alkylphenol-acetylene based, modified alkylphenolic resins and resins terpene-phenol based; and/or
- the natural resins, preferably from among the polyterpene natural resins selected from among the homo- or copolymers of alpha-pinene, of beta-pinene, of limonene, and of aromatic vinyl monomers (styrene) and/or of aromatic monomers (phenol), preferably having a glass transition temperature (Tg) greater than 25°C, and/or a softening temperature (Tm) comprised between 50°C and 150°C and/or a weight-average molecular weight comprised between 500 and 3000 g/mol; and/or the natural resins rosin based.

7. The composition as claimed in any one of the preceding claims further comprising at least one plasticising oil (C), preferably **characterised by** a weight-average molecular weight ($\overline{M}w$) not greater than 600 g/mol, or, if of the RAE (Residual Aromatic Extract) class, comprised between 400 and 10000 g/mol and/or by a glass transition temperature (Tg) less than -30°C.

8. The composition as claimed in any one of the preceding claims wherein the at least one liquid polymer (A) is a liquid polybutadiene and/or the at least one resin (B) is a terpene/styrene copolymer and/or the possible at least one plasticising oil (C) is a TDAE (Treated Distillate Aromatic Extract).

9. The composition as claimed in any one of the preceding claims wherein the at least one solid diene elastomeric polymer (D) is **characterised by** a weight-average molecular weight ($\overline{M}w$) greater than 80000 g/mol and/or a glass transition temperature (Tg) less than 20°C, preferably comprised between 0°C and -110°C.

10. The composition as claimed in any one of the preceding claims wherein the at least one solid diene elastomeric polymer (D) comprises

- from 20 to 100 phr, preferably from 40 to 100 phr of SBR, and/or
- from 0 to 60 phr, preferably from 0 to 50 phr of BR, and/or
- from 0 to 70 phr, preferably from 0 to 60 phr of NR.

11. The composition as claimed in any one of the preceding claims wherein X1=X and/or Y1=Y.

12. The composition as claimed in any one of the preceding claims wherein said mixing step (P1) is carried out by using one or more discontinuous mixers.

13. The composition as claimed in any one of the preceding claims wherein said mixing step (P1) comprises three mixing sub-steps carried out in one or more discontinuous mixers, preferably at a temperature of the material being processed comprised between 130°C and 150°C, between 100°C and 130°C and between 90°C and 110°C, respectively, and/or at a speed of the rotor comprised between 10 rpm and 60 rpm and/or for a time between 50 and 600 seconds for each sub-step.

14. The composition as claimed in any one of the preceding claims wherein said reworking step (P2) is executed by applying a specific energy of at least 0.1 kWh/kg and/or of not over 0.6 kWh/kg, and/or at a rotation speed of the screws or rotor from 60 to 300 revolutions per minute, and/or at a suction pressure Pa less than 100 mbar, less than 50 mbar or 40 mbar, and/or at a temperature of the material being processed less than 120°C.

15. The composition as claimed in any one of the preceding claims wherein said reworking step (P2) is executed in a continuous mixer of the twin-screw or multi-screw or planetary type.

16. A final elastomeric composition comprising a composition as claimed in any one of claims 1 to 15 and furthermore:

- at least 0.05 phr of at least one vulcanising agent (F), and preferably
- from 0.5 to 10 phr of at least one activating agent for the vulcanisation; and/or
- from 0.05 to 10 phr of at least one accelerant for the vulcanisation, and/or
- from 0.05 to 2 phr of at least one retardant for the vulcanisation, and/or
- from 0.1 to 20 phr of at least one coupling agent (G).

17. A process for preparing an elastomeric composition for tyres for vehicles comprising at least
one quantity X equal to at least 1 phr of at least one liquid polymer (A),
one quantity Y equal to at least 1 phr of at least one resin (B),
100 phr of at least one solid diene elastomeric polymer (D),
at least 30 phr of at least one reinforcing filler (E);
according to any one of claims 1 to 15,
which comprises at least a mixing and dispersion step (P1) to give a first elastomeric composition followed by at least one reworking step (P2),
wherein the mixing and dispersion step (P1) comprises

- feeding at least one mixing apparatus, comprising at least one discontinuous mixer and/or at least one continuous mixer, at least:

one quantity X1 of the liquid polymer (A), wherein $0 \leq X1 \leq X$,
one quantity Y1 of the resin (B), wherein $0 \leq Y1 \leq Y$,
the solid diene elastomeric polymer (D),
the reinforcing filler (E);

- mixing and dispersing said components, to give said first elastomeric composition;
- possibly unloading said first elastomeric composition from said mixing apparatus;
and wherein the reworking step (P2) comprises
- feeding, to at least one continuous mixer, said first elastomeric composition and, possibly,

one quantity X2 of the liquid polymer (A), wherein $0 \leq X2 \leq X$,
one quantity Y2 of the resin (B), wherein $0 \leq Y2 \leq Y$,
wherein X1 + X2 = X and Y1 + Y2 =Y,

- mixing said first elastomeric composition and dispersing therein the liquid polymer (A) and/or the resin (B) possibly fed in step (P2), by means of said at least one continuous mixer, preferably by applying, to said continuous mixer, a suction pressure (Pa) less than about 150 mbar in a manner so as to obtain said elastomeric composition; and
- unloading said elastomeric composition from said at least one continuous mixer.

18. A component for tyres for vehicles comprising a final elastomeric composition obtained by using an elastomeric composition as claimed in claim 16.

**19.** The component as claimed in claim 18, said component being a tread band.

**20.** A tyre for vehicles comprising a component or a tread band as claimed in claims 18 or 19.

**21.** The tyre as claimed in claim 20 for winter or for all-season use.


**Patentansprüche**

**1.** Elastomerzusammensetzung für Reifen für Fahrzeuge, umfassend zumindest eine Menge X gleich zumindest 1 phr zumindest eines flüssigen Polymers (A),
eine Menge Y gleich zumindest 1 phr zumindest eines Harzes (B),
100 phr zumindest eines festen Dien-Elastomerpolymers (D),
zumindest 30 phr zumindest eines verstärkenden Füllstoffes (E) ;
wobei die Zusammensetzung gemäß einem Verfahren (P) erhalten werden kann, das zumindest einen Misch- und Dispergierschritt (P1) umfasst, um eine erste Elastomerzusammensetzung zu ergeben, gefolgt von zumindest einem Aufarbeitungsschritt (P2),
wobei der Misch- und Dispergierschritt (P1) umfasst:

- Speisen zumindest einer Mischvorrichtung, umfassend zumindest einen diskontinuierlichen Mischer; und/oder zumindest einen kontinuierlichen Mischer, mit zumindest:

einer Menge X1 des flüssigen Polymers (A), wobei $0 \leq X1 \leq X$,
einer Menge Y1 des Harzes (B), wobei $0 \leq Y1 \leq Y$,
des festen Dien-Elastomerpolymers (D),
des verstärkenden Füllstoffes (E);

- Mischen und Dispergieren der Komponenten, um die erste Elastomerzusammensetzung zu ergeben;
- ggf. Ausladen der ersten Elastomerzusammensetzung aus der Mischvorrichtung;
und wobei der Aufarbeitungsschritt (P2) umfasst
- Speisen des zumindest einen kontinuierlichen Mischers mit der ersten Elastomerzusammensetzung und ggf.
einer Menge X2 des flüssigen Polymers (A), wobei $0 \leq X2 \leq X$,
einer Menge Y2 des Harzes (B), wobei $0 \leq Y2 \leq Y$,
wobei $X1 + X2 = X$ und $Y1 + Y2 = Y$,
- Mischen der ersten Elastomerzusammensetzung und Dispergieren des flüssigen Polymers (A) und/oder des Harzes (B), das ggf. in Schritt (P2) eingespeist wurde, darin mittels des zumindest einen kontinuierlichen Mischers, vorzugsweise durch Ausüben eines Saugdrucks (Pa) kleiner als etwa 150 mbar auf den kontinuierlichen Mischer, auf eine Weise, um die Elastomerzusammensetzung zu erhalten; und
- Ausladen der Elastomerzusammensetzung aus dem zumindest einen kontinuierlichen Mischer.

**2.** Zusammensetzung nach Anspruch 1, wobei die Gesamtmenge (Y) des Harzes B kleiner als 30 phr ist.

**3.** Zusammensetzung nach Anspruch 1 oder 2, umfassend zumindest:

- eine Menge X zumindest eines flüssigen Polymers (A) zwischen 3 und 70 phr, 5 und 60 phr oder zwischen 5 und 50 phr oder zwischen 5 und 40 phr oder zwischen 5 und 30 phr; und/oder
- eine Menge Y zumindest eines Harzes (B) zwischen 3 und 30 phr oder zwischen 3 und 25 phr oder zwischen 5 und 30 phr oder zwischen 5 und 25 phr oder zwischen 5 und 20 phr oder zwischen 5 und 15 phr; und/oder
- ggf. eine Menge Z zumindest eines Weichmacheröls (C) zwischen 0 und 70 phr oder zwischen 0 und 60 phr oder zwischen 0 und 50 phr oder zwischen 5 und 70 phr oder zwischen 10 und 60 phr oder zwischen 15 und 50 phr, und/oder
- von 30 bis 120 phr oder von 50 bis 120 phr oder von 70 bis 110 phr oder von 80 bis 100 phr zumindest eines verstärkenden Füllstoffes (E).

**4.** Zusammensetzung nach einem der Ansprüche 1 bis 3, wobei:

- das flüssige Polymer (A) durch ein gewichtsmittleres Molekulargewicht ($\overline{M}w$) nicht höher als 80.000 g/mol, und/oder durch eine Glasübergangstemperatur (Tg) unter 0 °C, vorzugsweise durch ein gewichtsmittleres Molekulargewicht ($\overline{M}w$) zwischen 500 und 80.000 g/mol, noch bevorzugter zwischen 500 und 60.000 g/mol und/oder durch eine Glasübergangstemperatur (Tg) zwischen -105 und 0 °C, noch bevorzugter zwischen -100 °C und -50 °C, gekennzeichnet ist;

- das Harz (B) durch ein gewichtsmittleres Molekulargewicht ($\overline{M}w$) zwischen 200 und 3.000 g/mol, vorzugsweise zwischen 500 und 2.000 g/mol und/oder durch eine Glasübergangstemperatur (Tg) von mehr als 0 °C, vorzugsweise mehr als 25 °C und/oder durch eine Erweichungstemperatur (Tm) von mehr als 25 °C, vorzugsweise zwischen 50 und 160 °C oder zwischen 80 °C und 140 °C oder, für ein flüssiges Harz (B), weniger als 25 °C, vorzugsweise weniger als 0 °C, weniger als -10 °C, oder weniger als -25 °C, gekennzeichnet ist.

5. Zusammensetzung nach einem der vorhergehenden Ansprüche, wobei das zumindest eine flüssige Polymer (A) ausgewählt ist aus:

- den flüssigen Polymeren (A) auf Butadien-Basis (BR), **gekennzeichnet durch** ein ($\overline{M}w$) zwischen 500 und 30.000 g/mol, vorzugsweise zwischen 3.000 und 10.000 g/mol, und/oder eine Glasübergangstemperatur (Tg) zwischen -100 °C und 0 °C, vorzugsweise zwischen -95 °C und -50 °C; und/oder
- den flüssigen Polymeren (A) auf Isopren-Basis (IR), **gekennzeichnet durch** ein ($\overline{M}w$) zwischen 3.000 und 80.000 g/mol, vorzugsweise zwischen 10.000 und 60.000 g/mol, und/oder eine Glasübergangstemperatur (Tg) zwischen -70 °C und -30 °C; und/oder
- den flüssigen Polymeren auf Styrol/Butadien-Basis (SBR), **gekennzeichnet durch** ein ($\overline{M}w$) zwischen 1.000 und 60.000 g/mol, noch bevorzugter zwischen 3.000 und 50.000 g/mol und/oder durch einen Styrolgehalt zwischen 5 und 50 Gew.-%, vorzugsweise zwischen 5 und 30 Gew.-%, und/oder eine Tg von weniger als 0 °C, noch bevorzugter zwischen -70 und 0 °C, und/oder
- den depolymerisierten natürlichen flüssigen Polymeren (NR), **gekennzeichnet durch** ein ($\overline{M}w$) von weniger als 60.000 g/mol, vorzugsweise kleiner als 40.000 g/mol.

6. Zusammensetzung nach einem der vorhergehenden Ansprüche, wobei das zumindest eine Harz (B) ausgewählt ist aus:

- den Kohlenwasserstoffharzen, vorzugsweise aus den Kohlenwasserstoffharzen, die aus den Cumaron-Inden-, Styrol-Inden-, Styrol-Alkylstyrol- und den aliphatischen Kohlenwasserstoffharzen abgeleitet sind, vorzugsweise mit einem gewichtsmittleren Molekulargewicht zwischen 500 und 3.000 g/mol, noch bevorzugter zwischen 700 und 1.500 g/mol; und/oder
- den Phenolharzen, vorzugsweise aus den Harzen auf Alkylphenol-Formaldehyd-Basis, den Alkylphenol-Harzen, die mit Rosin modifiziert sind, den Harzen auf Alkylphenol-Acetylen-Basis, den modifizierten Alkylphenol-Harzen und den Harzen auf Terpen-Phenol-Basis; und/oder
- den natürlichen Harzen, vorzugsweise den natürlichen Polyterpenharzen, ausgewählt aus den Homo- oder Copolymeren von alpha-Pinen, beta-Pinen, Limonen und aromatischen Vinylmonomeren (Styrol) und/oder aromatischen Monomeren (Phenol), vorzugsweise mit einer Glasübergangstemperatur (Tg) von mehr als 25 °C, und/oder einer Erweichungstemperatur (Tm) zwischen 50 °C und 150 °C und/oder einem gewichtsmittleren Molekulargewicht zwischen 500 und 3.000 g/mol; und/oder den natürlichen Harzen auf Kolophoniumbasis.

7. Zusammensetzung nach einem der vorhergehenden Ansprüche, ferner umfassend zumindest ein Weichmacheröl (C), vorzugsweise **gekennzeichnet durch** ein gewichtsmittleres Molekulargewicht ($\overline{M}w$) von nicht mehr als 600 g/mol, oder, wenn es aus der Klasse der RAE (Residual Aromatic Extract) stammt, zwischen 400 und 10.000 g/mol, und/oder durch eine Glasübergangstemperatur (Tg) von mehr als -30 °C.

8. Zusammensetzung nach einem der vorhergehenden Ansprüche, wobei das zumindest eine flüssige Polymer (A) ein flüssiges Polybutadien ist, und/oder das zumindest eine Harz (B) ein Terpen/Styrol-Copolymer ist und/oder das ggf. zumindest eine Weichmacheröl (C) ein TDAE (Treated Distillate Aromatic Extract) ist.

9. Zusammensetzung nach einem der vorhergehenden Ansprüche, wobei das zumindest eine feste Dien-Elastomerpolymer (D) durch ein gewichtsmittleres Molekulargewicht ($\overline{M}w$) von mehr als 80.000 g/mol und/oder eine Glasübergangstemperatur (Tg) kleiner als 20 °C, vorzugsweise zwischen 0 °C und -110 °C, gekennzeichnet ist.

10. Zusammensetzung nach einem der vorhergehenden Ansprüche, wobei das zumindest eine feste Dien-Elastomerpolymer (D) umfasst:

- von 20 bis 100 phr, vorzugsweise von 40 bis 100 phr SBR, und/oder
- von 0 bis 60 phr, vorzugsweise von 0 bis 50 phr BR, und/oder
- von 0 bis 70 phr, vorzugsweise von 0 bis 60 phr NR.

11. Zusammensetzung nach einem der vorhergehenden Ansprüche, wobei X1 = X und/oder Y1 = Y.

12. Zusammensetzung nach einem der vorhergehenden Ansprüche, wobei der Mischschritt (P1) durch Verwendung eines oder mehrerer diskontinuierlicher Mischer erfolgt.

13. Zusammensetzung nach einem der vorhergehenden Ansprüche, wobei der Mischschritt (P1) drei Misch-Teilschritte umfasst, die in einem oder mehreren diskontinuierlichen Mischern durchgeführt werden, vorzugsweise bei einer Temperatur des Materials, das verarbeitet wird, jeweils zwischen 130 °C und 150 °C, zwischen 100 °C und 130 °C und zwischen 90 °C und 110 °C, und/oder mit einer Drehzahl des Rotors zwischen 10 U/min und 60 U/min und/oder für eine Zeit zwischen 50 und 600 Sekunden für jeden Teilschritt.

14. Zusammensetzung nach einem der vorhergehenden Ansprüche, wobei der Aufarbeitungsschritt (P2) ausgeführt wird, indem eine spezifische Energie von zumindest 0,1 kWh/kg und/oder von nicht mehr als 0,6 kWh/kg aufgewendet wird,
und/oder bei einer Drehzahl der Schnecken oder des Rotors von 60 bis 300 Umdrehungen pro Minute, und/oder bei einem Saugdruck Pa von weniger als 100 mbar, weniger als 50 mbar oder 40 mbar, und/oder bei einer Temperatur des Materials, das verarbeitet wird, von weniger als 120 °C.

15. Zusammensetzung nach einem der vorhergehenden Ansprüche, wobei der Aufarbeitungsschritt (P2) in einem kontinuierlichen Mischer vom Doppelschnecken- oder Mehrschnecken- oder Planetentyp ausgeführt wird.

16. Fertige Elastomerzusammensetzung umfassend eine Zusammensetzung nach einem der Ansprüche 1 bis 15 und ferner:

- zumindest 0,05 phr zumindest eines Vulkanisationsmittels (F), und vorzugsweise
- von 0,5 bis 10 phr zumindest eines Aktivators für die Vulkanisierung; und/oder
- von 0,05 bis 10 phr zumindest eines Beschleunigers für die Vulkanisierung, und/oder
- von 0,05 bis 2 phr zumindest eines Verzögerers für die Vulkanisierung, und/oder
- von 0,1 bis 20 phr zumindest eines Haftvermittlers (G).

17. Verfahren zur Herstellung einer Elastomerzusammensetzung für Reifen für Fahrzeuge, umfassend zumindest eine Menge Y gleich zumindest 1 phr zumindest eines flüssigen Polymers (A),
eine Menge Y gleich zumindest 1 phr zumindest eines Harzes (B),
100 phr zumindest eines festen Dien-Elastomerpolymers (D), zumindest 30 phr zumindest eines verstärkenden Füllstoffes (E) ;
nach einem der Ansprüche 1 bis 15,
umfassend zumindest einen Misch- und Dispergierschritt (P1), um eine erste Elastomerzusammensetzung zu ergeben, gefolgt von zumindest einem Aufarbeitungsschritt (P2),
wobei der Misch- und Dispergierschritt (P1) umfasst:

- Speisen zumindest einer Mischvorrichtung, umfassend zumindest einen diskontinuierlichen Mischer; und/oder zumindest einen kontinuierlichen Mischer, mit zumindest:

einer Menge X1 des flüssigen Polymers (A), wobei $0 \leq X1 \leq X$,
einer Menge Y1 des Harzes (B), wobei $0 \leq Y1 \leq Y$,
des festen Dien-Elastomerpolymers (D),
des verstärkenden Füllstoffes (E);

- Mischen und Dispergieren der Komponenten, um die erste Elastomerzusammensetzung zu ergeben;
- ggf. Ausladen der ersten Elastomerzusammensetzung aus der Mischvorrichtung;
und wobei der Aufarbeitungsschritt (P2) umfasst
- Speisen des zumindest einen kontinuierlichen Mischers mit der ersten Elastomerzusammensetzung und ggf.
einer Menge X2 des flüssigen Polymers (A), wobei $0 \leq X2 \leq X$,
einer Menge Y2 des Harzes (B), wobei $0 \leq Y2 \leq Y$,

wobei X1 +X2 = X und Y1 +Y2 =Y,

- Mischen der ersten Elastomerzusammensetzung und Dispergieren des flüssigen Polymers (A) und/oder des Harzes (B), das ggf. in Schritt (P2) eingespeist wurde, darin mittels des zumindest einen kontinuierlichen Mischers, vorzugsweise durch Ausüben eines Saugdrucks (Pa) kleiner als etwa 150 mbar auf den kontinuierlichen Mischer, auf eine Weise, um die Elastomerzusammensetzung zu erhalten; und

- Ausladen der Elastomerzusammensetzung aus dem zumindest einen kontinuierlichen Mischer.

**18.** Komponente für Reifen für Fahrzeuge, umfassend eine fertige Elastomerzusammensetzung, die durch Verwendung einer Elastomerzusammensetzung nach Anspruch 16 erhalten wird.

**19.** Komponente nach Anspruch 18, wobei die Komponente ein Lauffälchenring ist.

**20.** Reifen für Fahrzeuge, umfassend eine Komponente oder einen Laufflächenring nach einem der Ansprüche 18 oder 19.

**21.** Reifen nach Anspruch 20 zur Verwendung als Winter- oder Ganzjahresreifen

**Revendications**

**1.** Composition élastomère pour pneus pour véhicules comprenant au moins
une quantité X égale à au moins 1 phr d'au moins un polymère liquide (A),
une quantité Y égale à au moins 1 phr d'au moins une résine (B),
100 phr d'au moins un polymère élastomère diénique solide (D),
au moins 30 phr d'au moins une charge renforçante (E) ;
dans laquelle ladite composition peut être obtenue selon un procédé (P) qui comprend au moins une étape de mélange et de dispersion (P1) pour donner une première composition élastomère suivie d'au moins une étape de retravail (P2),
dans laquelle l'étape de mélange et de dispersion (P1) comprend le fait

- d'alimenter au moins un appareil de mélange, comprenant au moins un mélangeur discontinu et/ou au moins un mélangeur continu, en au moins :

une quantité X1 du polymère liquide (A), où $0 \leq X1 \leq X$,
une quantité Y1 de la résine (B), où $0 \leq Y1 \leq Y$,
le polymère élastomère diénique solide (D),
la charge renforçante (E) ;

- de mélanger et de disperser lesdits composants pour donner ladite première composition élastomère ;
- de décharger éventuellement ladite première composition élastomère dudit appareil de mélange ;
et où l'étape de retravail (P2) comprend le fait
- d'alimenter, au moins un mélangeur continu, en ladite première composition élastomère et, éventuellement, en

une quantité X2 du polymère liquide (A), où $0 \leq X2 \leq X$,
une quantité Y2 de la résine (B), où $0 \leq Y2 \leq Y$, où X1 + X2 = X et Y1 + Y2 = Y,

- de mélanger ladite première composition élastomère et d'y disperser le polymère liquide (A) et/ou la résine (B) éventuellement fourni(e)(s) à l'étape (P2), au moyen dudit au moins un mélangeur continu, de préférence en appliquant, audit mélangeur continu, une pression d'aspiration (Pa) inférieure à environ 150 mbar de manière à obtenir ladite composition élastomère ; et
- de décharger ladite composition élastomère dudit au moins un mélangeur continu.

**2.** Composition telle que revendiquée dans la revendication 1, dans laquelle la quantité totale (Y) de la résine B est inférieure à 30 phr.

**3.** Composition telle que revendiquée dans la revendication 1 ou 2, comprenant au moins :

- une quantité X d'au moins un polymère liquide (A) comprise entre 3 et 70 phr, 5 et 60 phr ou entre 5 et 50 phr ou entre 5 et 40 phr ou entre 5 et 30 phr ; et/ou

- une quantité Y d'au moins une résine (B) comprise entre 3 et 30 phr ou entre 3 et 25 phr ou entre 5 et 30 phr ou entre 5 et 25 phr ou entre 5 et 20 phr ou entre 5 et 15 phr ; et/ou

- éventuellement, une quantité Z d'au moins une huile plastifiante (C) comprise entre 0 et 70 phr ou entre 50 et 60 phr ou entre 0 et 50 phr ou entre 5 et 70 phr ou entre 10 et 60 phr ou entre 15 et 50 phr, et/ou

- 30 à 120 phr ou 50 à 120 phr ou 70 à 110 phr ou 80 à 100 phr d'au moins une charge renforçante (E).

**4.** Composition telle que revendiquée dans l'une des revendications 1 à 3, dans laquelle :

- ledit polymère liquide (A) est **caractérisé par** un poids moléculaire moyen en poids ($\overline{M}$w) ne dépassant pas 80000 g/mol, et/ou par une température de transition vitreuse (Tg) inférieure à 0°C, de préférence par un poids moléculaire moyen en poids ($\overline{M}$w) compris entre 500 et 80000 g/mol, plus préférablement entre 500 et 60000 g/mol et/ou par une température de transition vitreuse (Tg) comprise entre -105 et 0°C, plus préférablement entre -100°C et - 50°C ;

- ladite résine (B) est **caractérisée par** un poids moléculaire moyen en poids ($\overline{M}$w) compris entre 200 et 3000 g/mol, de préférence entre 500 et 2000 g/mol et/ou par une température de transition vitreuse (Tg) supérieure à 0°C, de préférence supérieure à 25°C et/ou par une température de ramollissement (Tm) supérieure à 25°C, de préférence comprise entre 50 et 160°C ou entre 80°C et 140°C ou, pour une résine liquide (B), inférieure à 25°C, de préférence inférieure à 0°C, inférieure à -10°C ou inférieure à -25°C.

**5.** Composition telle que revendiquée dans l'une quelconque des revendications précédentes, dans laquelle l'au moins un polymère liquide (A) est choisi parmi :

- les polymères liquides (A) à base de butadiène (BR) **caractérisés par** un ($\overline{M}$w) compris entre 500 et 30000 g/mol, de préférence entre 3000 et 10000 g/mol et/ou une température de transition vitreuse (Tg) comprise entre - 100°C et 0°C, de préférence entre -95°C et -50°C ; et/ou

- les polymères liquides (A) à base d'isoprène (IR) **caractérisés par** un ($\overline{M}$w) compris entre 3000 et 80000 g/mol, de préférence entre 10000 et 60000 g/mol et/ou une température de transition vitreuse (Tg) comprise entre - 70°C et -30°C ; et/ou

- les polymères liquides à base de styrène/butadiène (SBR) **caractérisés par** un ($\overline{M}$w) compris entre 1000 et 60000 g/mol, plus préférablement entre 3000 et 50000 g/mol et/ou par une teneur en styrène comprise entre 5 et 50% en poids, de préférence entre 5 et 30% en poids et/ou une Tg inférieure à 0°C, plus préférablement comprise entre -70 et 0°C, et/ou

- les polymères liquides naturels dépolymérisés (NR) **caractérisés par** un ($\overline{M}$w) inférieur à 60000 g/mol, de préférence inférieur à 40000 g/mol.

**6.** Composition telle que revendiquée dans l'une quelconque des revendications précédentes, dans laquelle l'au moins une résine (B) est choisie parmi :

- les résines hydrocarbonées, de préférence parmi les résines hydrocarbonées dérivées de la coumarone-indène, le styrène-indène, le styrène-alkylstyrène et les résines hydrocarbonées aliphatiques, ayant de préférence un poids moléculaire moyen en poids compris entre 500 et 3000 g/mol, plus préférablement entre 700 et 1500 g/mol ; et/ou

- les résines phénoliques, de préférence parmi les résines à base d'alkylphénol-formaldéhyde, les résines alkylphénoliques modifiées à la colophane, les résines à base d'alkylphénol-acétylène, les résines alkylphénoliques modifiées et les résines à base de terpène-phénol ; et/ou

- les résines naturelles, de préférence parmi les résines naturelles polyterpènes choisies parmi les homopolymères ou copolymères d'alpha-pinène, de bêta-pinène, de limonène et de monomères vinyliques aromatiques (styrène) et/ou de monomères aromatiques (phénol), ayant de préférence une température de transition vitreuse (Tg) supérieure à 25°C, et/ou une température de ramollissement (Tm) comprise entre 50°C et 150°C et/ou un poids moléculaire moyen en poids compris entre 500 et 3000 g/mol ; et/ou les résines naturelles à base de colophane.

**7.** Composition telle que revendiquée dans l'une quelconque des revendications précédentes, comprenant en outre au moins une huile plastifiante (C), **caractérisée** de préférence par un poids moléculaire moyen en poids ($\overline{M}$w) ne dépassant pas 600 g/mol, ou, en cas de classe RAE (Extrait Aromatique Résiduel), compris entre 400 et 10000 g/mol et/ou par une température de transition vitreuse (Tg) inférieure à -30°C.

**8.** Composition telle que revendiquée dans l'une quelconque des revendications précédentes, dans laquelle l'au moins un polymère liquide (A) est un polybutadiène liquide et/ou l'au moins une résine (B) est un copolymère terpène/styrène et/ou l'au moins une huile plastifiante (C) possible est un TDAE (Extrait Aromatique de Distillat Traité).

**9.** Composition telle que revendiquée dans l'une quelconque des revendications précédentes, dans laquelle l'au moins un polymère élastomère diénique solide (D) est **caractérisé par** un poids moléculaire moyen en poids ($\overline{M}w$) supérieur à 80000 g/mol et/ou une température de transition vitreuse (Tg) inférieure à 20°C, de préférence comprise entre 0°C et -110°C.

**10.** Composition telle que revendiquée dans l'une quelconque des revendications précédentes, dans laquelle l'au moins un polymère élastomère diénique solide (D) comprend

   - 20 à 100 phr, de préférence 40 à 100 phr de SBR, et/ou
   - 0 à 60 phr, de préférence 0 à 50 phr de BR, et/ou
   - 0 à 70 phr, de préférence 0 à 60 phr de NR.

**11.** Composition telle que revendiquée dans l'une quelconque des revendications précédentes, dans laquelle X1 = X et/ou Y1 = Y.

**12.** Composition telle que revendiquée dans l'une quelconque des revendications précédentes, dans laquelle ladite étape de mélange (P1) est réalisée en utilisant un ou plusieurs mélangeur(s) discontinu(s).

**13.** Composition telle que revendiquée dans l'une quelconque des revendications précédentes, dans laquelle ladite étape de mélange (P1) comprend trois sous-étapes de mélange réalisées dans un ou plusieurs mélangeur(s) discontinu(s), de préférence à une température du matériau en cours de traitement comprise entre 130°C et 150°C, entre 100°C et 130°C et entre 90°C et 110°C, respectivement, et/ou à une vitesse du rotor comprise entre 10 tr/min et 60 tr/min et/ou pendant une durée comprise entre 50 et 600 secondes pour chaque sous-étape.

**14.** Composition telle que revendiquée dans l'une quelconque des revendications précédentes, dans laquelle ladite étape de retravail (P2) est exécutée en appliquant une énergie spécifique d'au moins 0,1 kWh/kg et/ou d'au plus 0,6 kWh/kg, et/ou à une vitesse de rotation des vis ou du rotor allant de 60 à 300 tours par minute, et/ou à une pression d'aspiration Pa inférieure à 100 mbar, inférieure à 50 mbar ou à 40 mbar, et/ou à une température du matériau en cours de traitement inférieure à 120°C.

**15.** Composition telle que revendiquée dans l'une quelconque des revendications précédentes, dans laquelle ladite étape de retravail (P2) est exécutée dans un mélangeur continu du type à double vis ou à vis multiples ou planétaire.

**16.** Composition élastomère finale comprenant une composition telle que revendiquée dans l'une quelconque des revendications 1 à 15 et en outre :

   - au moins 0,05 phr d'au moins un agent de vulcanisation (F), et de préférence
   - 0,5 à 10 phr d'au moins un agent activant pour la vulcanisation ; et/ou
   - 0,05 à 10 phr d'au moins un accélérateur pour la vulcanisation, et/ou
   - 0,05 à 2 phr d'au moins un retardateur pour la vulcanisation, et/ou
   - 0,1 à 20 phr d'au moins un agent de couplage (G).

**17.** Procédé de préparation d'une composition élastomère pour pneus pour véhicules comprenant au moins une quantité X égale à au moins 1 phr d'au moins un polymère liquide (A),
une quantité Y égale à au moins 1 phr d'au moins une résine (B),
100 phr d'au moins un polymère élastomère diénique solide (D),
au moins 30 phr d'au moins une charge renforçante (E) ;
selon l'une quelconque des revendications 1 à 15,
qui comprend au moins une étape de mélange et de dispersion (P1) pour donner une première composition élastomère suivie d'au moins une étape de retravail (P2),
dans lequel l'étape de mélange et de dispersion (P1) comprend le fait

   - d'alimenter au moins un appareil de mélange, comprenant au moins un mélangeur discontinu et/ou au moins un mélangeur continu, en au moins :

une quantité X1 du polymère liquide (A), où $0 \leq X1 \leq X$,
une quantité Y1 de la résine (B), où $0 \leq Y1 \leq Y$,
le polymère élastomère diénique solide (D),
la charge renforçante (E) ;

- de mélanger et de disperser lesdits composants pour donner ladite première composition élastomère ;
- de décharger éventuellement ladite première composition élastomère dudit appareil de mélange ;
et dans lequel l'étape de retravail (P2) comprend le fait
- d'alimenter, au moins un mélangeur continu, en ladite première composition élastomère et, éventuellement, en

une quantité X2 du polymère liquide (A), où $0 \leq X2 \leq X$,
une quantité Y2 de la résine (B), où $0 \leq Y2 \leq Y$, où X1 + X2 = X et Y1 + Y2 = Y,

- de mélanger ladite première composition élastomère et d'y disperser le polymère liquide (A) et/ou la résine (B) éventuellement fourni(e)(s) à l'étape (P2), au moyen dudit au moins un mélangeur continu, de préférence en appliquant, audit mélangeur continu, une pression d'aspiration (Pa) inférieure à environ 150 mbar de manière à obtenir ladite composition élastomère ; et
- de décharger ladite composition élastomère dudit au moins un mélangeur continu.

18. Composant pour pneus pour véhicules comprenant une composition élastomère finale obtenue en utilisant une composition élastomère telle que revendiquée dans la revendication 16.

19. Composant tel que revendiqué dans la revendication 18, ledit composant étant une bande de roulement.

20. Pneu pour véhicules comprenant un composant ou une bande de roulement tel/telle que revendiqué(e) dans la revendication 18 ou 19.

21. Pneu tel que revendiqué dans la revendication 20, pour une utilisation en hiver ou pour toutes saisons.

FIG.1

FIG.2

FIG.3

FIG.4

EP 3 350 259 B1

# FIG.5

# FIG.6

EP 3 350 259 B1

## REFERENCES CITED IN THE DESCRIPTION

**Patent documents cited in the description**

- US 2007135564 A
- US 4840988 A
- US 5851321 A
- US 2013289197 A
- EP 1990217 A
- WO 2008145155 A
- WO 2013039499 A
- WO 2013032468 A
- WO 2007017060 A
- WO 2004022644 A
- EP 2468815 A

- EP 1085046 A
- EP 1035164 A
- EP 1514901 A
- US 6525133 B
- US 6204320 B
- WO 2014191953 A
- WO 2012085714 A
- EP 928679 A
- WO 2009062525 A
- US 20130172474 A